# EUROPÄISCHE PATENTANMELDUNG

(11) **EP 3 109 565 A1**
(43) Veröffentlichungstag der Anmeldung: **28.12.2016**
(21) Anmeldenummer: 15001862.0
(22) Anmeldetag: 26.06.2015
(51) Int. Cl.: F24J 2/04

(54) **ATMUNGSAKTIVE BASISHÜLLE**

(71) Anmelder: Frenzel, Doris, 45699 herten (DE)
(72) Erfinder: Frenzel, Doris, 45699 herten (DE)

(57) **Zusammenfassung**

Atmungsaktive Basishülle die auf die Dämmung der Außenwände eines Gebäudes verzichtet. Eine umlaufende Luftschicht zwischen einer neuen Wetterhülle und den ursprünglichen Außenwänden verteilt überschüssige Wärme einer Außenseite des Gebäudes zu den anderen Außenseiten. Die Funktionsweisen des Verfahrens, "Wärmebrückenprinzip" und "Atmungsprinzips", sorgen für eine gleichmäßige Temperierung und regeln den Feuchtigkeitshaushalt des Gebäudes. Das Verfahren nutzt die thermischen Eigenschaften von Luft in Abhängigkeit von der Geschwindigkeit der Luftströmung. Es nutzt auch unterschiedliche thermische Eigenschaften der neuen Wetterhülle gegenüber der ursprünglichen Außenhülle. Wird die Wetterhülle transparent aufgebaut, wird über den Treibhauseffekt eine zusätzliche Wärmeausbeute für das Gebäude erreicht**.**

## Beschreibung

Die atmungsaktive Basishülle aaB ist ein Verfahren zur energetischen Nutzung der Gebäudehüllen des Wohnbestandes. Es arbeitet in zwei Funktionsweisen. In der Funktionsweise nach "Wärmebrückenprinzip" nutzt es die Unterschiede der thermischen Eigenschaften einer neuen Wetterhülle(1) zur ursprünglichen Außenhülle(3), um Heizenergie zu sparen. Die vollständig umlaufende Luftschicht zwischen der Wetterhülle(1) und der Außenhülle(3) verteilt überschüssige Wärme oder auftretende "Wärmeverluste" einer Außenseite auf andere Seiten des Gebäudes. Das Gebäude wird auf allen Seiten gleichmäßig von außen temperiert. In der Funktionsweise nach "Atmungsprinzip" regelt das Verfahren den Feuchtigkeitshaushalt des Gebäudes, sorgt für die optimale Klimatisierung und veranlasst wenn nötig die Trocknung von Außenwänden. Das Verfahren aaB ermöglicht die energetische Nutzung jeder Gebäudehülle bei gleichzeitiger Klimatisierung des Gebäudes. Ein Umbau oder eine Komplettsanierung der ursprünglichen Außenhülle(3) sowie Umbauten im Innern des Gebäudes sind nicht erforderlich. Das Verfahren kann den speziellen Bedingungen des konkreten Wohnbestandes und jedem finanziell möglichen Rahmen angepasst werden. Es arbeitet daher in jeder Variante wirtschaftlich. Perspektivisch können innovative Energieträger in das Prinzip der atmungsaktiven Basishülle eingebunden werden. Das neue Verfahren wurde für Altbestände entwickelt, kann aber auch bei Neubauten Anwendung finden.

**Stand der Technik:** Allgemein sind die umfangreichen Bemühungen bekannt, den Heizenergiebedarf und die damit verbundene CO2-Emmision aller Immobilien auf ein Minimum zu reduzieren. Hierbei spielt die energetische Nutzung der Gebäudehüllen eine entscheidende Rolle. Vorgaben hinsichtlich bauphysikalischer und thermischer Eigenschaften der Gebäudehülle sind dafür erforderlich, die bei Neubauten von vornherein berücksichtigt werden können. Bei Altbeständen wurden die bauphysikalischen und thermischen Gegebenheiten jedoch bereits vor Jahren vorgegeben. Deshalb sind die beim Stand der Technik bekannten Verfahren zur Senkung des Heizenergieverbrauches bei gleichzeitiger Klimatisierung des Gebäudes nicht ohne hohe kostenintensive technische Aufwände für Altbestände umsetzbar. Die technische Umsetzung erfordert in Altbeständen den kompletten Umbau oder Neuaufbau der Gebäudehüllen. Hierzu einige Beispiele: beim Verfahren EP0683363 B1 wird die klimatische Funktion der Gebäudehülle über speziell angeordnete neue Bauelemente in der Gebäudehülle gesteuert. Bei EP 2 180 262 A1 fungiert eine opake Fassadenheizung als Wandwärmetauscher, was technisch aufwendige, komplette Umbauten an der vorhandenen Gebäudehülle im Innern erfordert. Beim Verfahren EP 0601335 A1 wird eine Querlüftung zur Klimatisierung im Innern des Gebäudes erreicht, in dem luftführende Bauelemente in einer inneren und einer äußeren Gebäudehülle mit entsprechenden Öffnungen angeordnet werden. Beim Stand der Technik ist für die Realisierung ein angemessenes Kosten-Nutzen-Verhältnis bei Altbeständen nicht gegeben, denn alle Verfahren sind mit technisch aufwendigen Umbauten der Fassaden oder Gebäudehüllen verbunden. Deshalb wird weiterhin auf die nachträgliche Dämmung der Außenhülle als wichtigste energetische Maßnahme für Gebäudehüllen der Altbestände gesetzt. Zur Dämmung kommen verschiedene Verfahren in der Praxis in Betracht. Allgemein bekannt sind das Wärmedämmverbundsystem (WDVS), auch kombiniert mit einer vorgehängten hinterlüfteten Fassade (VHF) und die Transparente Wärmedämmung (TWD). Vereinzelt finden auch spezielle Einblasdämmverfahren (Kerndämmung) Anwendung, die zwar kostengünstig sind, jedoch für die Mehrzahl der Wohnbestände nicht genutzt werden können, da sie ein zweischaliges Mauerwerk des Gebäudes voraussetzen. Jeweils ausführliche, aktuellste Veröffentlichungen zu den allgemein bekannten Systemen finden sich bei den entsprechenden Fachverbänden. Um nur einige zu nennen: beim Fachverband WDVS e. V., beim Fachverband Transparente Wärmedämmung e.V., beim Deutschen Energieberater-Netzwerk e.V. und der Deutscher Energieagentur (dena).

**Probleme beim Stand der Technik:** Die Energieeinsparungen, die durch Dämmung der Gebäudehülle theoretisch angesetzt werden, werden in der Praxis in den Altbeständen nicht erreicht. Eine nachträgliche Dämmung der Gebäudehülle (WDVS) zielt auf die Verminderung von Verlusten durch Transmission von Wärme aus dem Innern des Gebäudes über die Außenwände ab. Doch in gleicher Höhe wird auch der Wärmestrom von außen in das Innere des Gebäudes verhindert. Die natürliche Erwärmung des Gebäudes durch Sonneneinstrahlung ist daher bei gedämmten Außenflächen immer geringer als bei nicht gedämmten. Das hat zwangsläufig ein intensiveres Heizen im Innern zur Folge, führt zur Verlängerung der jährlichen Heizperiode und somit zu einer relativen Erhöhung des Gesamtheizbedarfes des Gebäudes. Eine transparente Wärmedämmung (TWD) nutzt im möglichen technischen Umfang die Solarenergie für den Wärmebedarf des Gebäudes. Die Solarenergie wird in Form von Wärme in der dahinter liegenden Außenwand des Gebäudes gespeichert und zeitverzögert an das Innere abgegeben. Im Sommer neigen südlich ausgerichtete Außenwände jedoch zur Überhitzung, deshalb müssen bei TWD zusätzlich kostenintensive Vorrichtungen zur Verschattung vorgesehen werden. Das größte bauphysikalische Problem aller Dämmaßnahmen ist jedoch ihre Luftdichtheit, welche die natürliche Luftzufuhr zu den Außenwänden des Gebäudes unterbindet. Das im allgemeinen Sprachgebrauch genannte "Atmen" der Wände wird dadurch vollständig verhindert. Eine natürliche Klimatisierung des Gebäudes ist nicht mehr gegeben. Das führt zu einer kausalen Verkettung von Feuchtigkeitsproblemen im Gebäude. Durch die Vermeidung der natürlichen Erwärmung der Außenwände über Sonneneinstrahlung werden die Probleme noch verstärkt: So bleiben Außenwände von Räumen, wie Schlafzimmern, Küchen und Bäder, die im Winter meist nicht kontinuierlich im Innern beheizt werden, kälter als sie ohne Dämmung wären. Die Schimmelgefahr wird in diesen Räumen durch Dämmung ihrer Außenwände erhöht. Um der Feuchtigkeit entgegenzutreten, wird den Bewohnern ein neues Heiz- und Lüftungsverhalten vorgegeben, welches den fehlenden, natürlichen Luftaustausch durch ein künstliches "Fächern" ersetzen soll: Fenster auf, Fenster zu, Fenster auf, Fenster zu... Das kontinuierliche Fächern wirkt aber dem eigentlichen Sinn der Dämmung, Heizenergie zu sparen, regelmäßig entgegen. Auch die Feuchtigkeit selbst wirkt dem Sinn der Dämmung entgegen. Dem ursächlichen Feuchtigkeitsproblem der Dämmung kann zwar durch eine vorgehängte, hinterlüfte Fassade (VHF) entgegen gewirkt werden, aber die Hinterlüftung erfordert ein Vielfaches an zusätzlichen Kosten und verringert, gerade durch die Hinterlüftung, auch die energetischen Einspareffekte. Die Dämmung verursacht auch Folgeinvestitionen: den Einbau von Lüftungsanlagen, gefolgt vom Einbau und der Wartung entsprechender Hygienefilter. Beim Stand der Technik stellt das Kosten-Nutzen-Verhältnis der Dämmung der Außenhülle, trotz kostengünstigster energetischer Maßnahme für den Altbestand, ein großes Problem dar. Die Amortisationsdauer auf Grundlage der Energieeinsparung beträgt bereits bei einer kostengünstigen Ausführung von WDVS über 30 Jahre!! Der Hauptgrund ist, dass bei der nachträglichen Dämmung auch immer eine Komplettsanierung der Gebäudehülle erfolgen muss, egal ob diese notwendig ist oder nicht. Mieter sind außerdem nicht gewillt oder nicht in der Lage dazu, eine den immensen Kosten für die energetische Sanierung angepasste Kaltmiete zu zahlen. Eine energetisch sanierte Gebäudehülle führt deshalb zum wesentlich erhöhten Leerstand von Wohnungen im sanierten Altbestand.

Die Herausforderung, die sich neue Verfahren zur Steigerung der Energieeffizienz in Altbeständen stellen müssen, ist den Heizenergieverbrauch zu senken, die Klimatisierung des Gebäudes zu gewährleisten und zugleich wirtschaftlich zu sein.

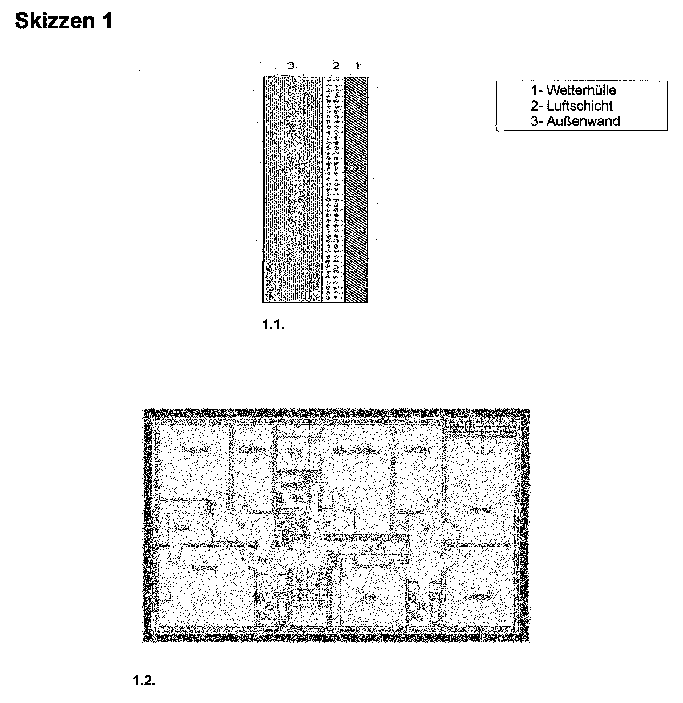

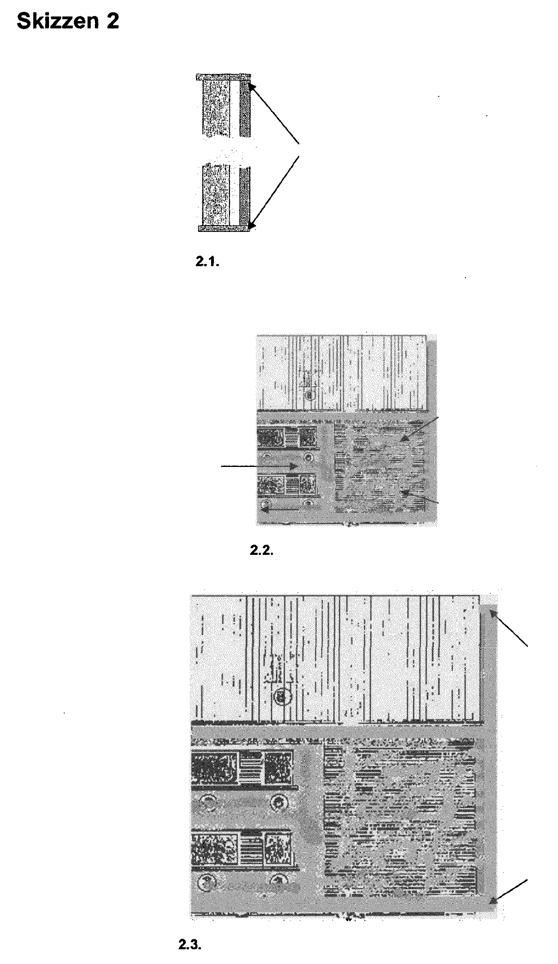

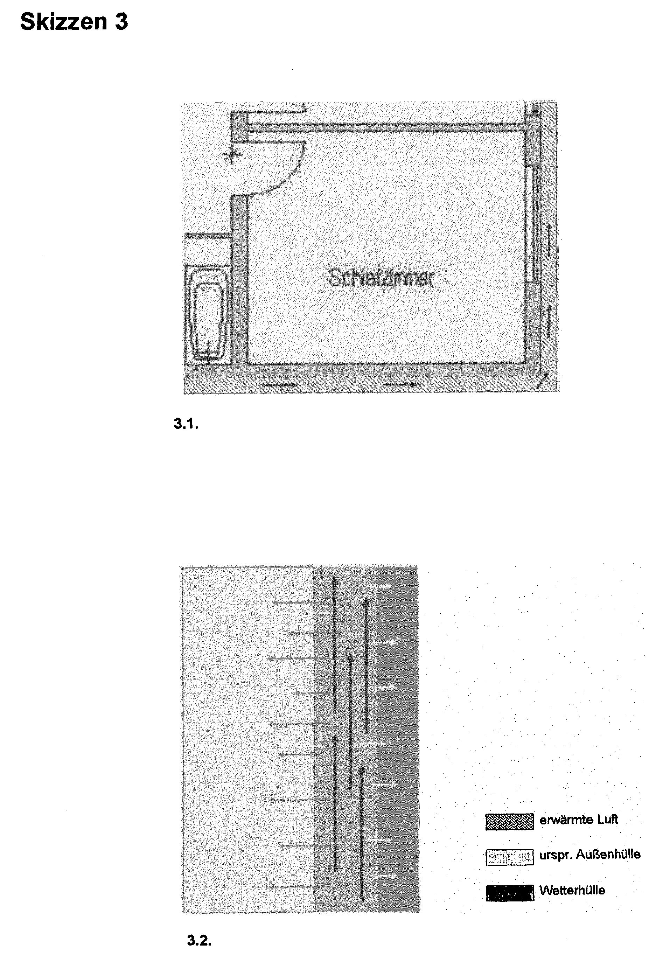

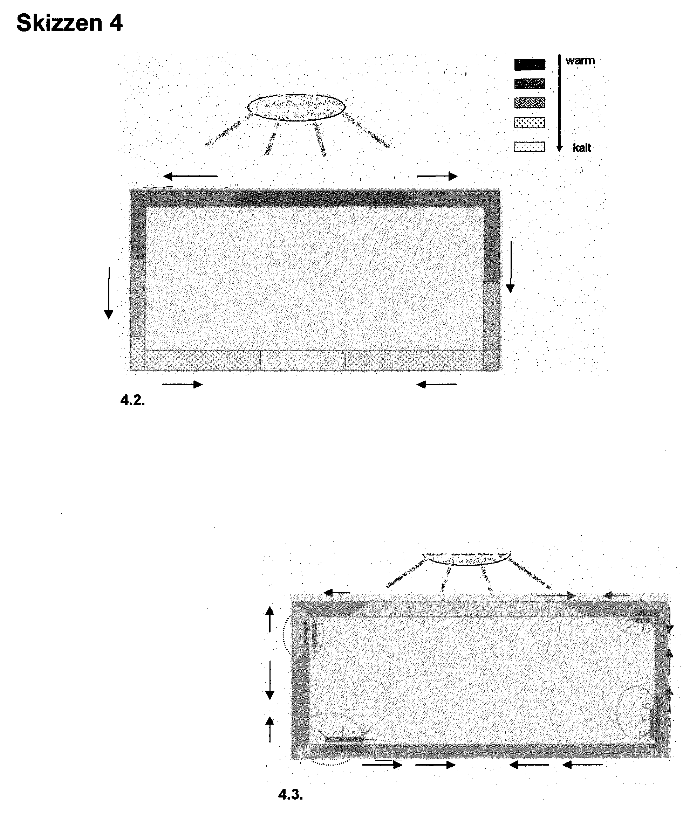

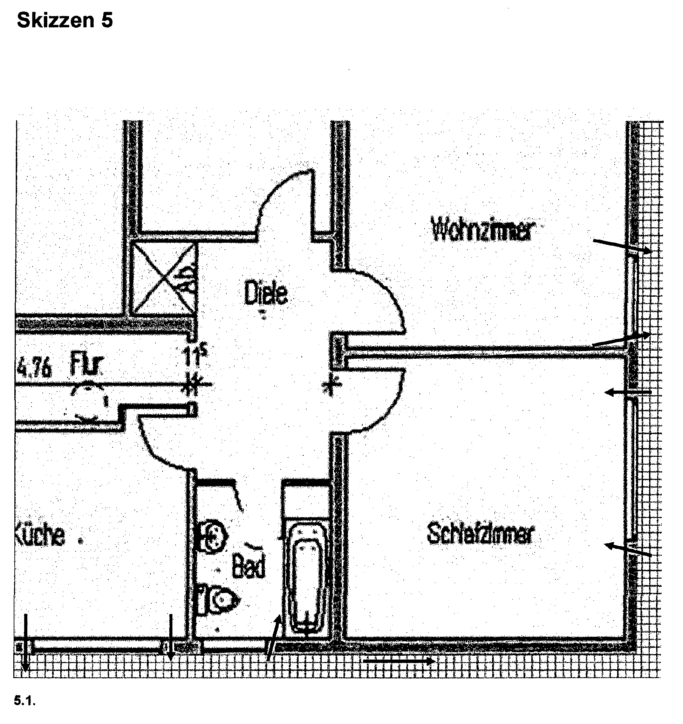

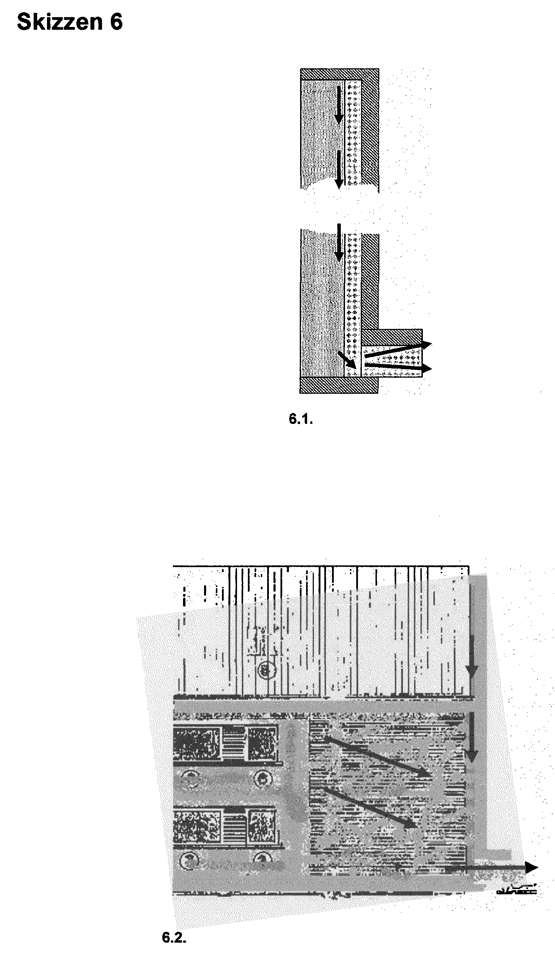

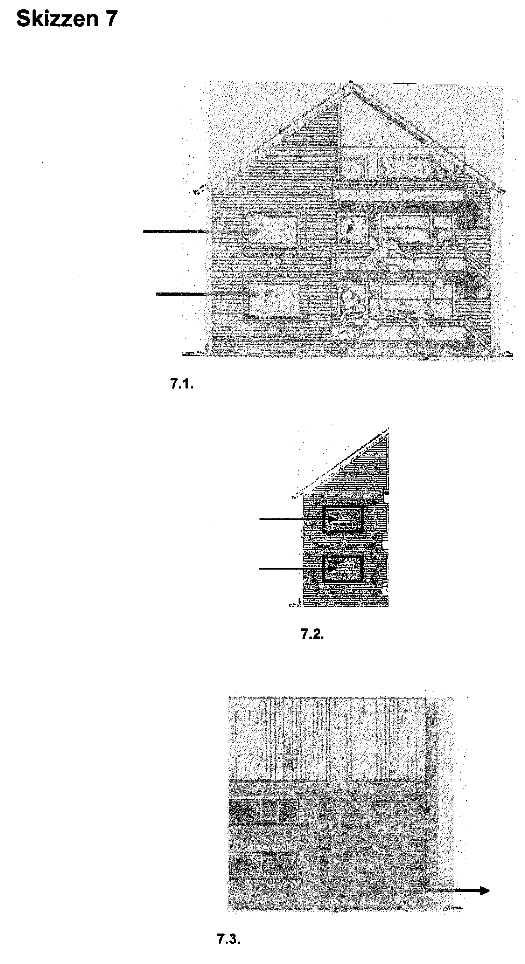

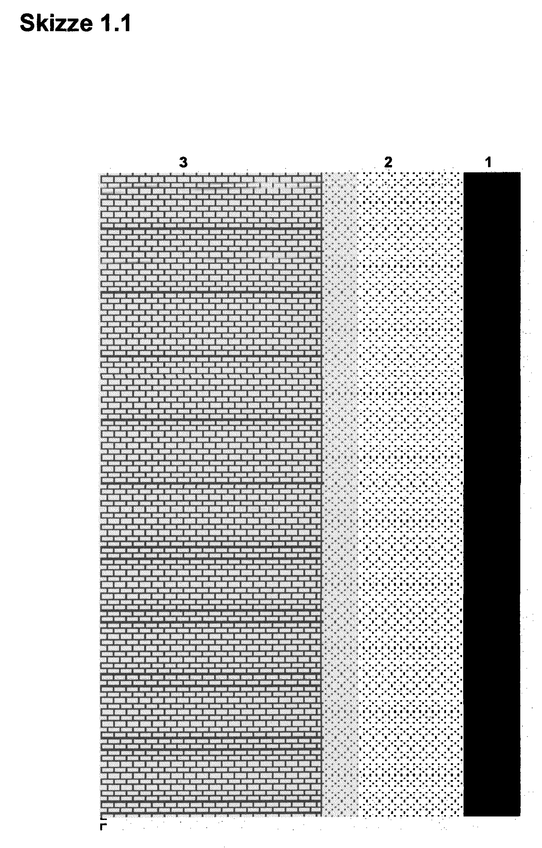

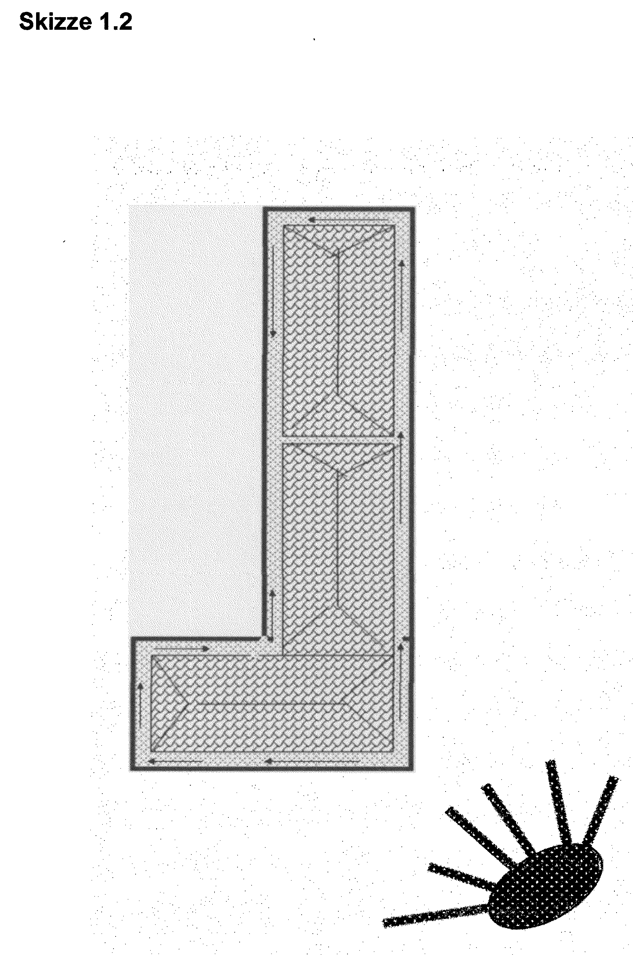

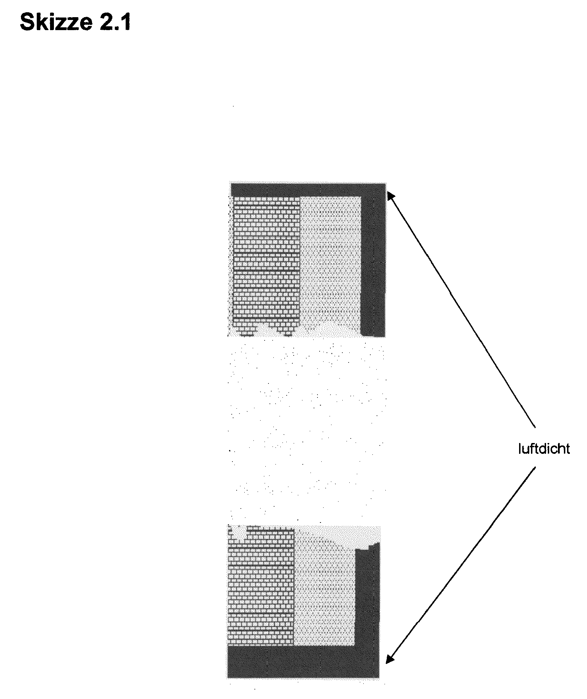

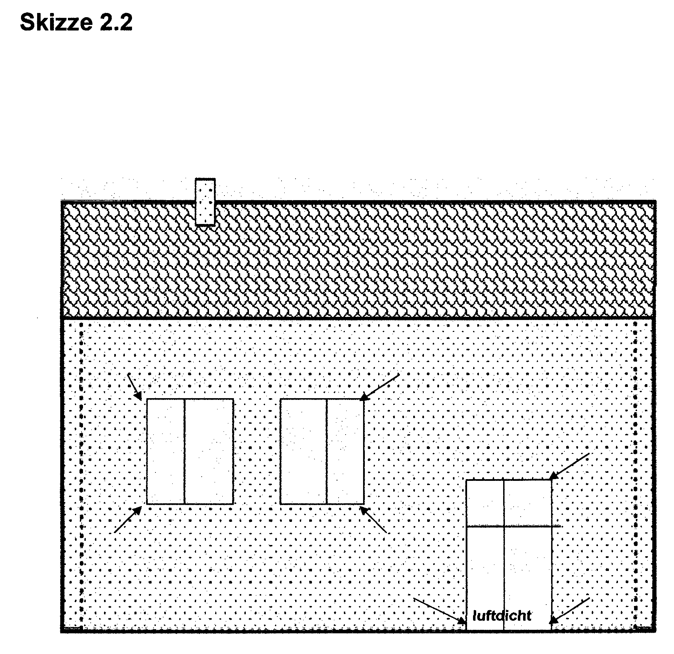

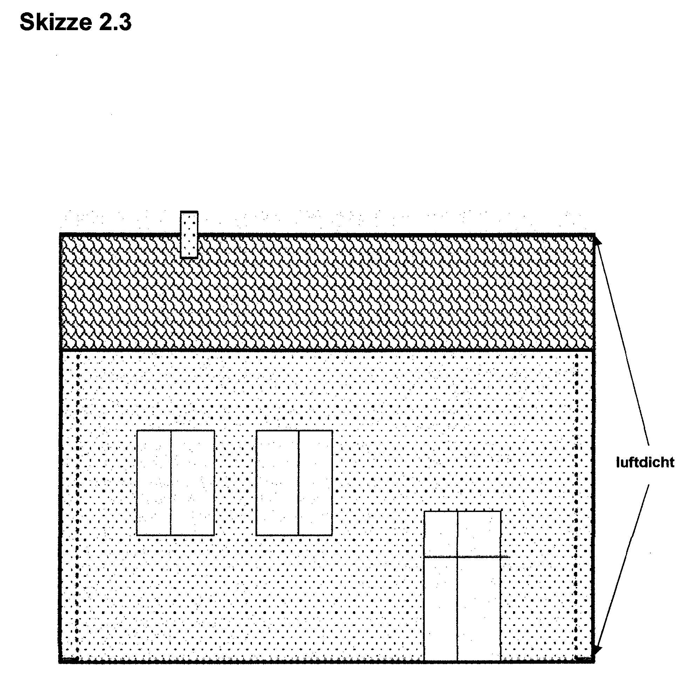

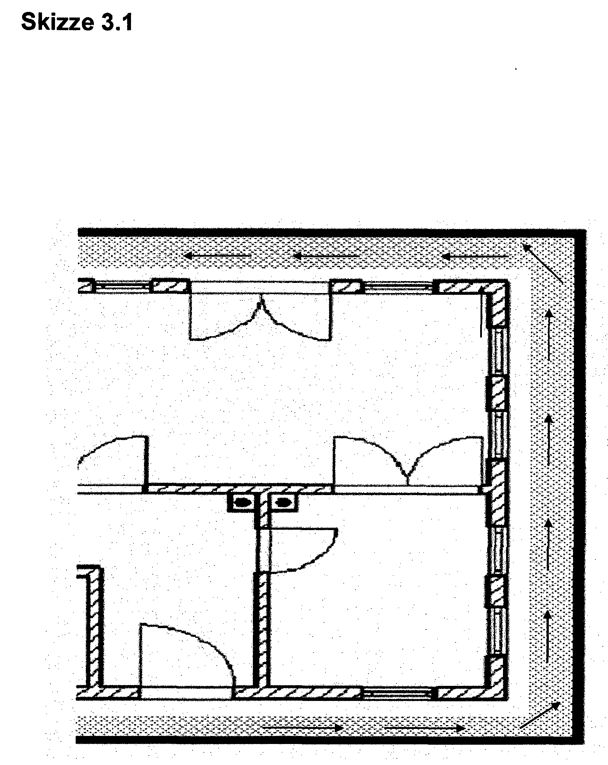

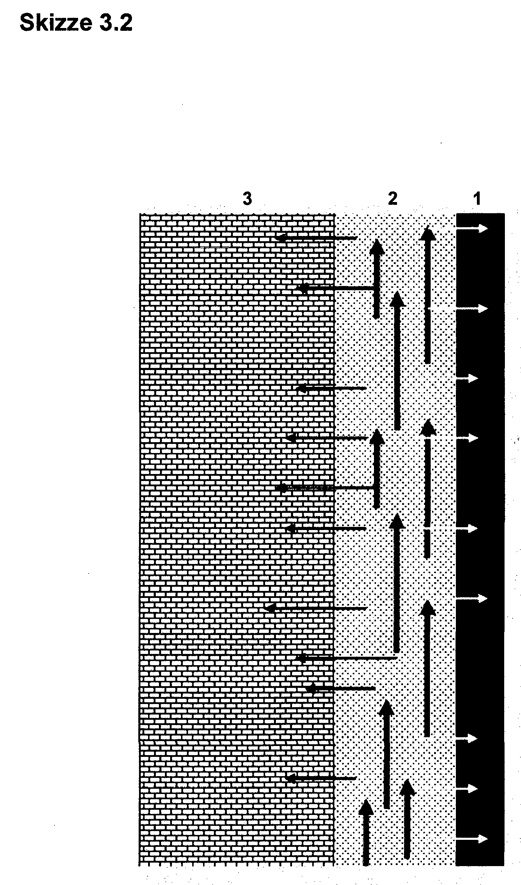

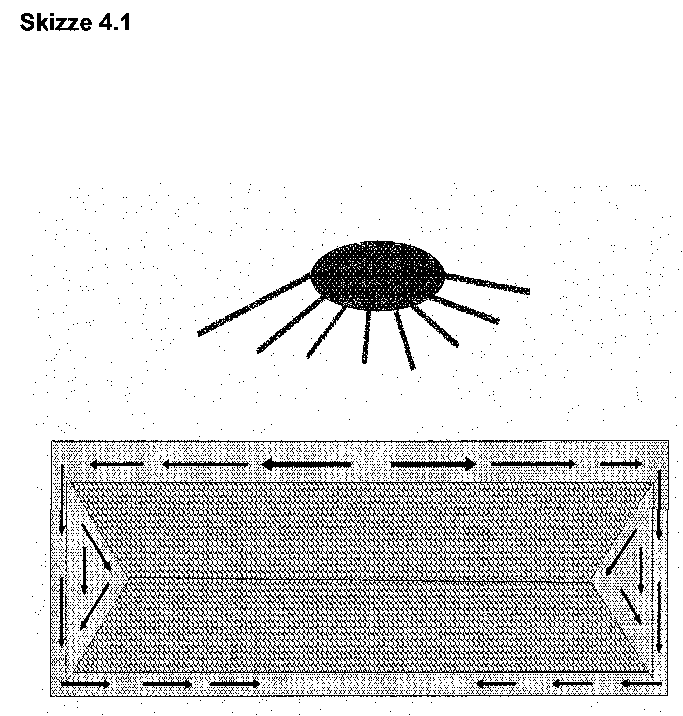

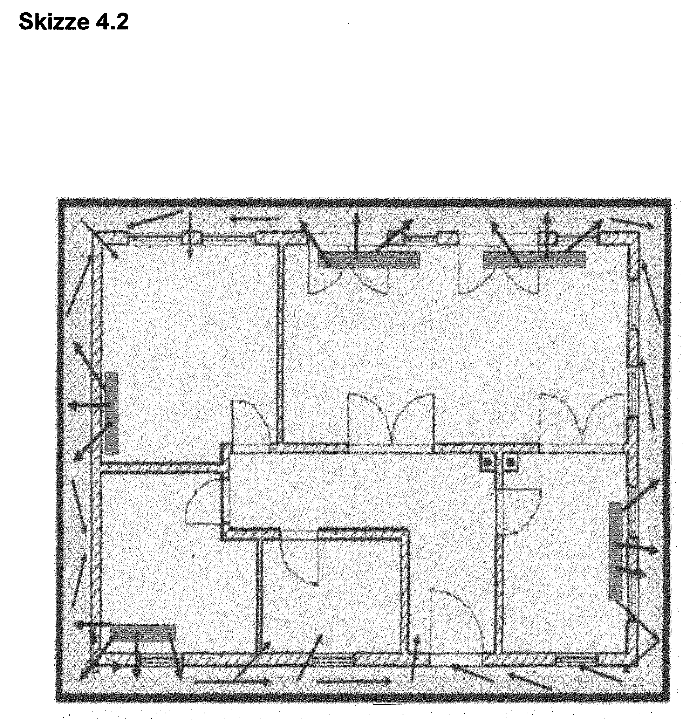

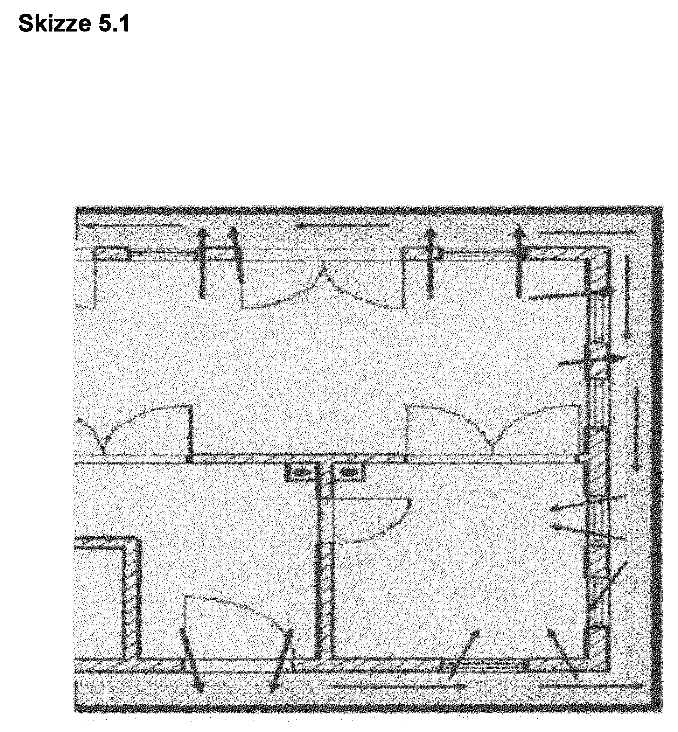

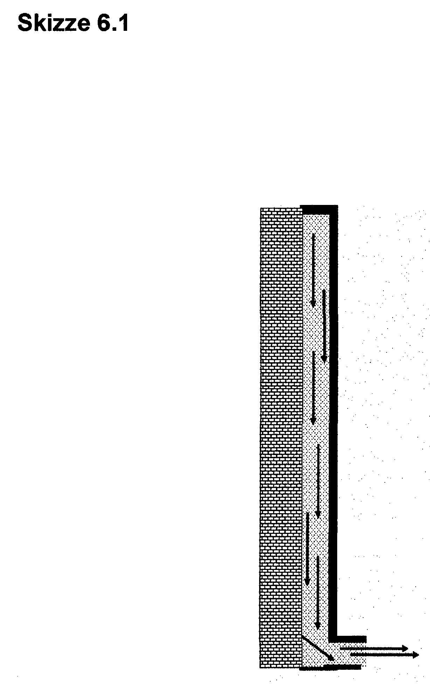

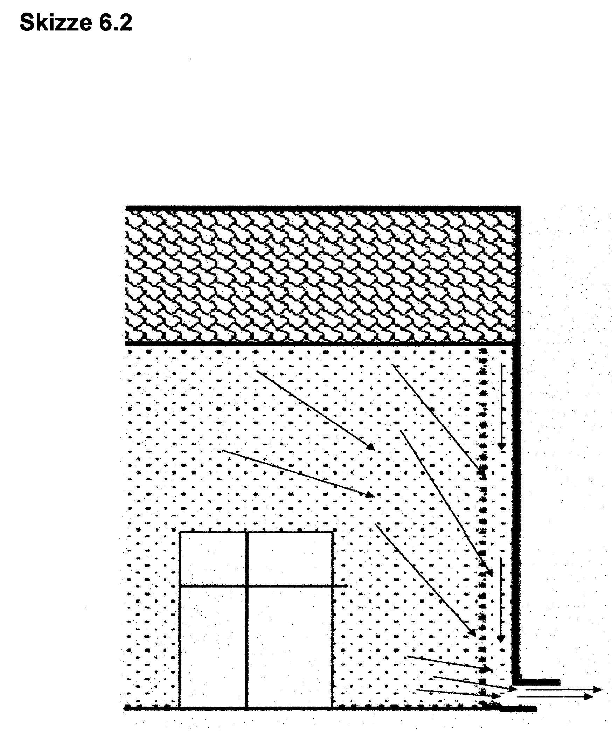

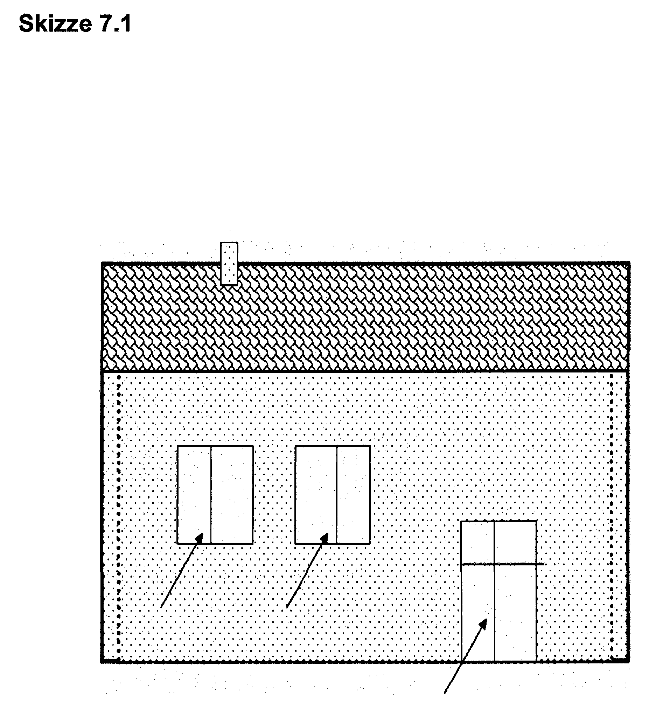

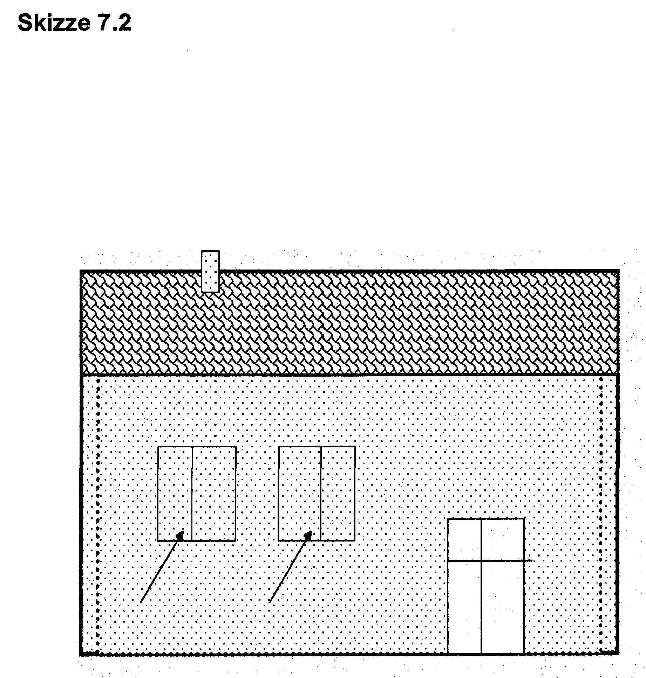

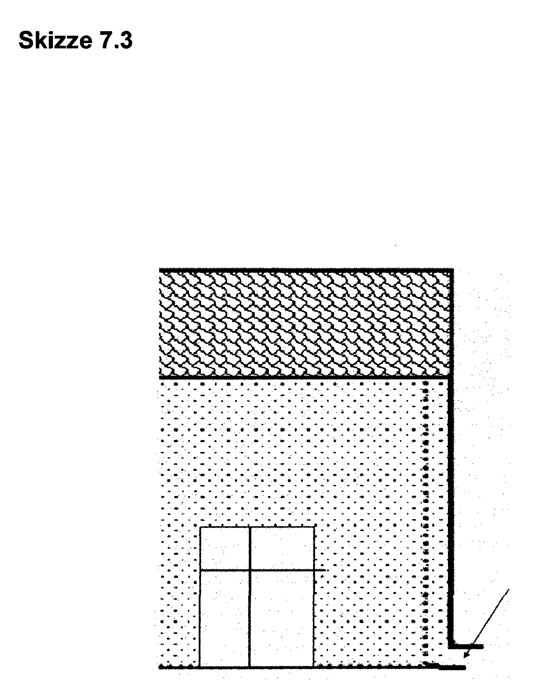

**Lösung:** Der angegebenen Neuheit liegen die beim Stand der Technik geschilderten Probleme zugrunde. Sie werden durch das neue Verfahren, die **atmungsaktive Basishülle aaB** reduziert oder eliminiert. Im Gegensatz zu WDVS und TWD verzichtet aaB auf die Dämmung der Außenhülle des Wohnbestandes. Das Verfahren aaB verzichtet auch auf die Hinterlüftung von Fassaden entsprechend VHF. Denn eine Dämmung oder stete Hinterlüftung der vorhandenen Außenflächen wirkt den Funktionsweisen der Erfindung entgegen. Das Verfahren sorgt für eine natürliche Klimatisierung des Gebäudes von außen. Dafür sind keinerlei Umbauten an der ursprünglichen Außenhülle oder im Inneren des Gebäudes erforderlich. Die energetischen Effekte von aaB basieren auf dem elementaren Bestreben der Natur, grundsätzlich über den Weg des geringsten Widerstandes ein energetisches Gleichgewicht herzustellen. Die Erfindung nutzt die thermischen Eigenschaften von Luft, ihre hohe Temperaturleitfähigkeit und ihre variable Wärmeleitfähigkeit in Abhängigkeit von der Geschwindigkeit der Luftströmung. Deshalb besteht, wie durch **Patentanspruch 1** gekennzeichnet, eine atmungsaktive Basishülle aus drei Grundkomponenten: einer neuen Wetterhülle (1), einer Luftschicht (2) und der ursprünglichen Außenhülle(3) des Gebäudes(4), wie Bild 1.1. der Zeichnung 1 schematisiert. Die neue Wetterhülle (1) definiert die Grenzen des energetischen Gesamtsystems "Gebäude"(4) im Verfahren aaB neu. Die Wetterhülle(1) wird vollständig um alle ursprünglich freistehenden Außenwände eines oder mehrerer Objekte errichtet, so wie Skizze 1.2 der Zeichnung 1 zeigt. Ein Gebäude(4) einer aaB kann daher je nach Lage und Wunsch sowohl aus einer einzelnen Immobilie als auch aus mehreren, nicht freistehenden Immobilien bestehen und wird als ein gemeinsames energetisches Gesamtgebäude betrachtet. Die Wetterhülle (1) wird mit einfachen, luftdicht verschließbaren Öffnungen, den Schleusen (5), versehen. Die Wetterhülle (1) umhüllt vollständig die zwischen ihr und der ursprünglichen Außenhülle (3) bestehende Luftschicht (2). Die Luftschicht (2) ist zwischen den verschiedenen Außenwänden nicht von einander getrennt. Die Luft kann sich innerhalb der Luftschicht(2) ungehindert von einer Wand zu jeder anderen Wand der ursprünglichen Außenhülle(3) bewegen, wie in Skizze 1.2. dargestellt. Die Wetterhülle (1) dient dem Wetterschutz des Gebäudes und besitzt alle, diesem Zweck dienenden Eigenschaften. Sie ist regen- sturm-, hagel-, frost- und temperaturbeständig. Sie ist winddicht und unbedingt luftdicht. Die Fassadenkonstruktion darf das Umlaufen der Luftschicht(2) nicht unterbrechen. Die optimale Dicke der Luftschicht (2) hängt im konkreten Wohnbestand von den thermischen Eigenschaften der ursprünglichen Außenhülle (3), den objektiven Gegebenheiten des Wohnbestandes und von den individuellen Erweiterungen des Systems (entsprechend Patentanspruch 6-11) ab. Die ursprüngliche Außenhülle (3) wird hinsichtlich ihrer thermischen Eigenschaften nicht verändert. Sie bleibt weiterhin so diffusionsoffen und luftdicht wie bisher. Sie behält ihre originalen Eigenschaften und Werte hinsichtlich Wärmedurchgang und Dämmung. Nach den gegebenen thermischen Eigenschaften der konkreten Außenhülle (3) richten sich die thermischen Mindestanforderungen an die Wetterhülle(1), die grundsätzlich einen geringeren Wärmedurchgangswert als die ursprüngliche Außenhülle (3), vor allem der äußeren Schichten besitzt. Die Wetterhülle (1) besitzt grundsätzliche bessere Dämmeigenschaften als die Außenhülle (3). Die Dämmwerte der Wetterhülle(1) können, wie in Patentanspruch 3 gekennzeichnet, maximiert werden. Um zusätzlich Treibhauseffekte zu nutzen, besteht die Wetterhülle(1) an den Sonnenseiten (Ost, Süd, West) aus transparentem Material. Beim Stand der Technik existieren ausreichende Möglichkeiten, eine transparente Wetterhülle(1) mit den geforderten Eigenschaften aufzubauen. Konkretere Vorgaben hinsichtlich der Konstruktion oder des Materials sind daher für die Erfindung nicht notwendig. Beim Stand der Technik ist die Wahl der Konstruktion für die Wetterhülle(1) nur von den Gegebenheiten des Gebäudes und dem individuell möglichen Finanzrahmen und Wünschen abhängig. Grundsätzlich gilt jedoch, je größer der Unterschied in den thermischen Eigenschaften von Wetterhülle (1) und ursprünglicher Außenhülle(3), umso effektiver wirkt die im Patentanspruch 1 gekennzeichnete Funktionsweise "Wärmebrückenprinzip"(6) der aaB. Die Luft innerhalb der Luftschicht(2) übt zwei grundsätzliche Funktionen aus: Sie ist beim Wärmebrückenprinzip(6) **aktives** Medium für Wärmetransport und Dämmung und fungiert beim "Atmungsprinzip"(7) als Grundlage der Luftzufuhr, dem **"Atmen"** der Außenhülle (3). Diese konträren Funktionen werden durch die Änderung der Geschwindigkeit der Luftströmung innerhalb der Luftschicht (2) provoziert. Je nach Bedarf befindet sich die Luft innerhalb der Luftschicht(2) gegenüber der Außenumgebung in einem geschlossenen oder in einem offenen System. Der Wechsel des Systems erfolgt durch natürliche Vorgänge oder durch einen erzwungenen Wechsel über eine bewusste Steuerung der Schleusen (5) der Wetterhülle(1). **Patenanspruch 3** kennzeichnet die Optimierung der Funktionsweise des Verfahrens nach dem "Wärmebrückenprinzip" (6) im geschlossenen System. Bei diesem System ist die Luft der Luftschicht (2) vollständig von der Außenumgebung getrennt, wie die Skizzen der Zeichnung 2 zeigen. Das wird durch die Luftdichtheit der Wetterhülle(1) und den zusätzlich luftdicht geschlossenen Schleusen(5) erreicht. Im geschlossenen System des Verfahrens befindet sich die Luft der Luftschicht(2) nur gegenüber der Außenumgebung in einem geschlossenen System, nicht aber gegenüber der ursprünglichen Außenhülle(3). Beim geschlossenen System der Erfindung handelt es sich also praktisch um ein einseitig geschlossenes System. Durch lokal erzeugte Wärme an einer Seite des Gebäudes(4) wird die Luft innerhalb der Luftschicht (2) an dieser Seite erwärmt. Da sie ihre Temperatur und den Druck nicht direkt mit der Außenumgebung ausgleichen kann, wird die Energie der erwärmten Luft über die umlaufende Luftschicht (2) an andere, kältere Außenseiten weitergeleitet und die unterschiedlichen Temperaturen innerhalb der Luftschicht (2) nivelliert. Überschüssige Wärme wird gleichmäßig um das Gebäude verteilt, wie in Skizze 3.1. der Zeichnung 3 dargestellt. Das vorhandene energetische Ungleichgewicht gegenüber den angrenzenden Hüllen wird vorrangig mit der Hülle ausgeglichen, die den höheren Wärmedurchgangswert besitzt. Im Vergleich zu den thermischen Eigenschaften der Wetterhülle(1) wirkt die ursprüngliche Außenhülle(3) nun wie eine großflächige Wärmebrücke. Den energetischen Ausgleich der Luftschicht (2) mit den umschließenden Hüllen zeigt Skizze 3.2. Er führt durch das Wärmebrückenprinzip(6) zur gleichmäßigen Verteilung von lokal erzeugter Wärme einer Seite auf alle Seiten des Gebäudes(4) und zur Erhöhung der allgemeinen Flächentemperatur aller Wände der ursprünglichen Außenhülle(3). Ohne weitere Maßnahmen verteilt die umlaufende Luftschicht (2) die Wärme auch an jene Räume, die sich an einer, der lokalen Wärmequelle gegenüberliegenden Außenwand befinden, was in Zeichnung 4 verdeutlicht wird. Die Transparenz des Materials der Wetterhülle (1) verursacht zusätzliche Treibhauseffekte und somit zusätzliche Wärmegewinne an der jeweiligen Sonnenseite des Gebäudes(4). Der Anteil an "überschüssiger" Wärmeenergie wird erhöht und immer auch an die gegenüberliegende Schattenseite transportiert, wie in Skizze 4.1. schematisiert. Es werden auch Außenseiten des Gebäudes(4) erwärmt, die auf natürlichem Weg nie direkt durch Sonneneinstrahlung erwärmt werden können, bspw. die Nordseite. Dagegen führt eine Erwärmung durch lokale Wärmequellen im Innern des Gebäudes zu austretender Transmissionswärme an den entsprechenden Wänden der ursprünglichen Außenhülle(3), wie Bild 4.2. skizziert. Die Transmissionswärme wird über die umschließende Luftschicht (2) zu anderen, kälteren Außenwänden geleitet und dient dort der allgemeinen Flächentemperierung des Gebäudes. Auch die an den eigentlichen Wärmebrücken der ursprünglichen Außenwände austretende Wärme, wie an Heizungsnischen oder Fenstern, dient zur allgemeinen Temperierung an anderen Außenflächen des Gebäudes(4). Die Wärmebücken entwickeln sich sogar zu vorteilhaften Wärmeeintrittspunkten für austretende Transmissionswärme, wie in Zeichnung 5 dargestellt. Wärmebrücken müssen nicht mehr kostenintensiv gedämmt werden. Überschüssige Wärme gelangt an diesen Stelle schneller wieder ins Innere des Gebäudes(4). Wenn Wärme von außen nach innen geleitet wird, sind vorhandene Wärmebrücken nun vorteilhaft. Das Verfahren nutzt alle Varianten lokal auftretender überschüssiger Wärme vorrangig **aktiv** zur Erwärmung des Gebäudes(4) an anderen Stellen. **Patentanspruch 4** kennzeichnet die Optimierung der Funktionsweise "Atmungsprinzip"(7) des offenen Systems des Verfahrens aaB. Ein offenes System entsteht durch Öffnen der Schleusen der Wetterhülle(1). Beim offenen System kann die Luft der Luftschicht(2) ihre Temperatur direkt mit der Außenumgebung ausgleichen, wie Zeichnung 6 zeigt. Durch geöffnete Schleusen wird eine Erhöhung der Strömungsgeschwindigkeit der Luft innerhalb der Luftschicht (2) provoziert. Das neue Verfahren wird zum Instrument der Luftzufuhr für die ursprüngliche Außenhülle(3) umfunktioniert. Die Luftzufuhr führt zur Abkühlung des Gebäudes(4). Wenn nötig können die Schleusen so weit geöffnet werden, dass "Durchzug" entsteht. Der ursprünglichen Außenhülle(3) kann Luft zur "**Atmung**" zugeführt werden, die auch zur Trocknung von Außenwänden genutzt werden kann. Andererseits kann ein zwischenzeitliches, temporäres Öffnen von Schleusen dazu genutzt werden, wärmere Luft schneller zu kälteren Außenseiten des Gebäudes(4) zu transportieren. Die Schleusen werden wieder geschlossen, bevor die an die kalte Außenwand transportierte Luft einen energetischen Ausgleich mit der Außenumgebung durchführen kann. Um die unterschiedlichen Funktionen beider Systeme effizient zu nutzen, werden bei der Neuheit weitere Schleusen berücksichtigt. **Patentanspruch 5** kennzeichnet die **Schleusentypen** des neuen Verfahrens aaB in Abhängigkeit von ihrer energetischen Funktion. Schleusen sind verschließbare Öffnungen, die beim neuen Verfahren für die variabel steuerbare Luftzufuhr, den Luftaustausch und den Systemwechsel des Verfahrens zuständig sind. Die energetischen Funktionen der Erfindung werden durch die Schleusentypen und ihrer effektiven Anordnung in den Hüllen des Gebäudes(4) optimiert. Im Wohnbestand bereits vorhandene Schleusen, wie Fenster, Türen und andere verschließbare Öffnungen, können in Abhängigkeit vom neuen Zweck im Verfahren aaB umfunktioniert werden, müssen aber nicht baulich verändert werden. Für die Erfindung werden drei Schleusentypen unterschieden: direkte Schleusen, innere Schleusen und äußere Schleusen. Die Schleusentypen werden in Zeichnung 7 dargestellt. Direkte Schleusen sind Schleusen, die vom Innern des Gebäudes direkt zur Außenumgebung führen und umgekehrt. Über Öffnen der direkten Schleusen wird wie bisher ermöglicht, einen Luft- und Feuchtigkeits-Austausch der Luft des Innern des Gebäudes direkt mit der Außenwelt herbeizuführen. Direkte Schleusen sind bereits in jedem Altbestand, in Form von herkömmlichen Türen und Fenstern vorhanden und können weiterhin in ihrer normalen Funktionalität unverändert genutzt werden, wie in Skizze 7.1. gezeigt wird. Die Wetterhülle (1) muss um eine direkte Schleuse so angebracht werden, dass sie luftdicht zur Schleuse abschließt. Das Umlaufen der Luftschicht (2) muss um direkte Schleusen aber immer gewährleistet bleiben. In allen Räumen des Gebäudes, in denen ein direkter Luftaustausch auf Grund hoch anfallender Feuchtigkeit unbedingt erforderlich ist, wie bspw. in Küchen und Bädern, bleiben die Fenster in der Variante "direkte Schleuse" in jedem Fall erhalten. Über direkte Schleusen kann keine unmittelbare Verbindung mit der Luft in der Luftschicht (2) hergestellt werden. Ein Betätigen direkter Schleusen verursacht keinen Systemwechsel der atmungsaktiven Basishülle. Für den Systemwechsel kommen nur indirekte, entweder "innere" oder "äußere" Schleusen zum Tragen. Über innere Schleusen kann die Luft der Luftschicht (2) nur direkt in das Innere des Gebäudes gelangen und umgekehrt. Innere Schleusen sind in Skizze 7.2. der Zeichnung 7 schematisiert. Innere Schleusen besitzen keine Verbindung zur Außenumgebung. Für innere Schleusen bieten sich bereits vorhandene Öffnungen der Außenhülle(3) an, die nicht als direkte Schleuse genutzt werden müssen, wie beispielsweise vorhandene Kellerfenster oder Zweitfenster auf einer Raumseite, so wie in Skizze 7.2 dargestellt. Auf der äußeren Seite sind innere Schleusen vollständig luftdicht durch die Wetterhülle(1) verschlossen. Innere Schleusen werden dazu genutzt, die Temperatur und den Druck der Luft der Luftschicht (2) direkt mit dem Innern des Gebäudes(4) auszugleichen. Dadurch kann ein schnellerer Wärmeaustausch der warmen Luft der Luftschicht(2) mit kälteren oder nicht beheizten Räumen herbeigeführt werden. Umgekehrt kann auch wärmere Luft aus überhitzten Räumen schnell und direkt über die inneren Schleusen in die Luftschicht (2) zur weiteren Verteilung an andere Außenwände geführt werden. Die Hauptfunktion innerer Schleusen besteht jedoch in der weiteren Ausgestaltung und Ergänzung der Erfindung entsprechend der gekennzeichneten Patentansprüche 6 und 7. Äußere Schleusen sind indirekte Schleusen, die von der Luftschicht (2) zur Außenumgebung führen und umgekehrt, aber nicht zum Innern des Gebäudes(4). Die äußeren Schleusen sind alle Öffnungen in der Wetterhülle(1). Werden die äußeren Schleusen geöffnet, erfolgt der Systemwechsel vom geschlossenen zum offenen System des neuen Verfahrens offensichtlich. Über die äußeren Schleusen kann ein direkter Temperatur- und Druckausgleich der Luftschicht (2) mit der Außenwelt erfolgen wie Skizze 7.3. zeigt. Das Öffnen äußerer Schleusen erzeugt eine Luftströmung, die als Grundlage der Luftzufuhr an die ursprüngliche Außenhülle (3), ihrer Abkühlung oder Trocknung dient. Durch die effektive Anordnung äußerer Schleusen kann erwärmte Luft einer Außenwand schnell und effizient zu einer gewünschten anderen Außenwand transportiert werden. Äußere Schleusen werden für den Wärmetransport um das Gebäude grundsätzlich im unteren Bereich der Wetterhülle(1) angebracht und vorrangig an der kältesten Außenwand geöffnet. Durch Setzen der äußeren Schleusen im unteren Bereich der Wetterhülle(1) kann nicht nur die Geschwindigkeit, sondern auch die Strömungsrichtung der Luft in der Luftschicht(2) zielgerichtet geregelt werden. Die Luft aus der höchsten und wärmsten Stelle der Luftschicht einer Außenseite kann bewusst und optimal zur kältesten, niedrigsten Stelle der gegenüberliegenden Außenseite gelenkt werden. Hat die Luft in der Luftschicht die kältere Außenseite erreicht und die äußeren Schleusen werden wieder geschlossen, bevor der thermische Ausgleich mit der Außenumgebung stattfinden kann, dient die Luft der wärmsten Stelle der wärmsten Außenwand zur Temperierung der kalten Außenwand an ihrer kältesten Stelle. Das Öffnen aller Schleusen kann durch natürliche Vorgänge oder bewusst manuell, mechanisch oder elektronisch erfolgen. Beim Stand der Technik stehen hierfür umfangreiche Möglichkeiten zur Verfügung. Eine konkrete Vorgabe der Steuerungsvariante ist für die Erfindung nicht relevant. Die Wahl der Steuerung ist nur von den Gegebenheiten des Gebäudes und dem individuell möglichen Finanzrahmen und Wünschen der Investoren abhängig.

**Erreichte Vorteile:** Der Aufbau einer atmungsaktiven Basishülle aaB ist beim Stand der Technik über verschieden technische Möglichkeiten umsetzbar und in jeder Variante wirtschaftlicher als die bekannten Dämmmaßnahmen. Außer für die Wetterhülle(1), deren Finanzrahmen über die Wahl des Materials, der Konstruktion und der Ansteuerung der Schleusen individuell beeinflusst werden kann, sind keine weiteren Investitionen nötig. Eine kostenintensive Komplettsanierung der ursprünglichen Außenhülle(3) entfällt. Zusatz- oder Folgeinvestitionen entfallen ebenfalls. Auf Belüftungsanlagen kann verzichtet werden. Das Verfahren aaB ermöglicht es, sämtliche lokal erzeugte, überschüssige Wärme einer Seite des Gebäudes zur Erwärmung der anderen, kälteren Seiten zu nutzen. Erst wenn das Gesamtgebäude überschüssige Wärme besitz, wird diese an die Außenumgebung abgegeben. Lokale Energiequellen innerhalb oder außerhalb des Gebäudes werden optimal für den Wärmebedarf des gesamten Gebäudes genutzt. Das neue Verfahren nutzt sowohl "überschüssige" Wärme als auch die austretende Transmissionswärme, die bei anderen Verfahren als Wärmeverluste betrachtet werden. Eine kostenintensive Dämmung vorhandener Wärmebrücken entfällt. Der Treibhauseffekt der Wetterhülle(1) erhöht die energetischen Effekte. Die nördlich und im Erdgeschoss gelegenen, und damit kältesten Wohnungen des Wohnbestandes werden durch überschüssige Wärme anderer Seiten erwärmt. Durch die regelbare Luftzufuhr zu den ursprünglichen Außenwänden werden Feuchtigkeit und somit gesundheitliche Probleme unterbunden. Die gleichmäßige Flächentemperierung des Gebäudes führt zur Unabhängigkeit von "falschen" Heiz- und Lüftungsverhalten der Mieter. Die Neuheit gefährdet weder die Gebäudesubstanz des Wohnbestandes, noch die Gesundheit seiner Bewohner. Ein weiterer wesentlicher Vorteil ist, dass eine atmungsaktive Basishülle nicht nur einem einzelnen Altbestand, sondern je nach Bedarf und Wunsch auch gesamten Gebäudekomplexen nutzt. Die Wirkungsweise wird von der Lage und dem Standort der Objekte unabhängig. Theoretisch können ganze Straßenzüge durch den Zusammenschluss zu einem energetischen Gebäude, so wie im Patentanspruch 2 beschrieben, gemeinsam lokal auftretende überschüssige Wärme nutzen. Beispielsweise kann die Sonneneinstrahlung an einer Straßenseite durch Verteilung der Wärme an die Schattenseite die hohen thermischen Unterschiede von Süd- und Nordwohnungen wesentlich ausgleichen. Alle Objekte innerhalb des Gebäudes(4) partizipieren im gleichen Umfang, sowohl energetisch als auch wirtschaftlich. Durch die weitere Ausgestaltung der Erfindung können zusätzliche energetische und wirtschaftliche Effekte erzielt werden.

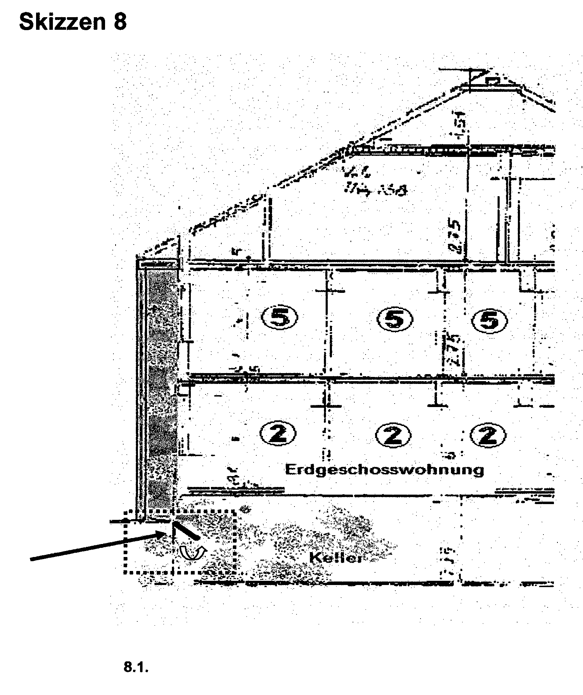

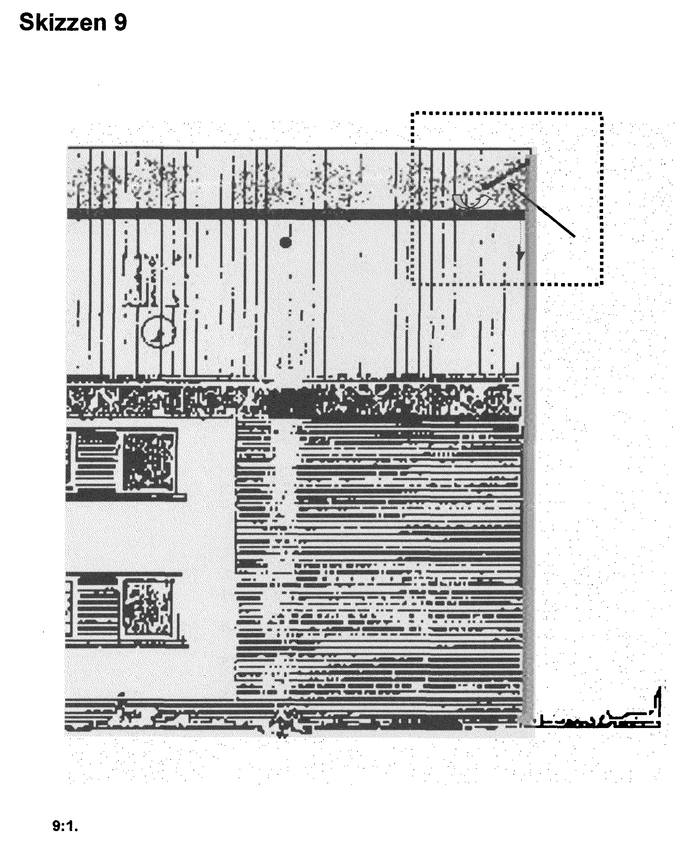

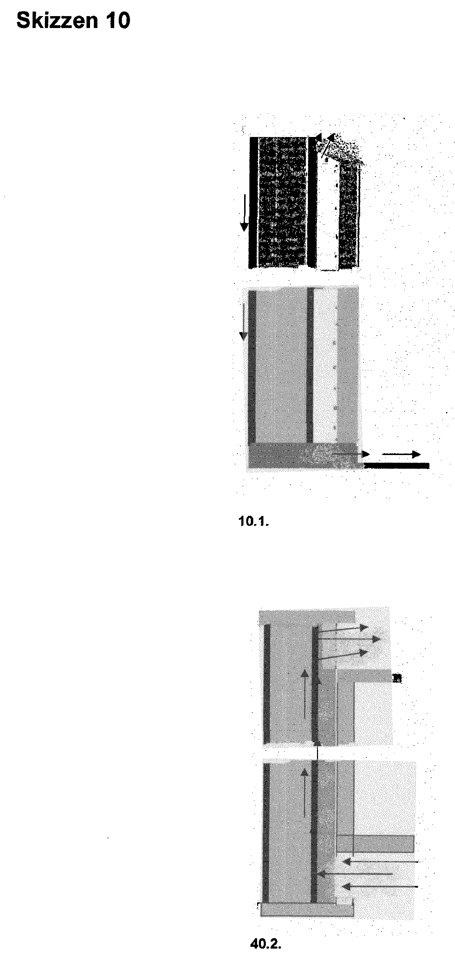

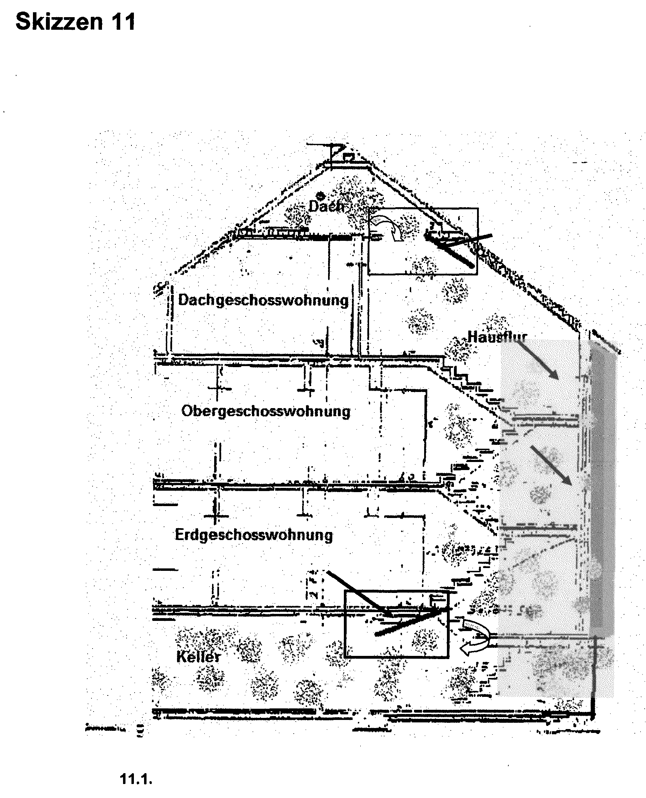

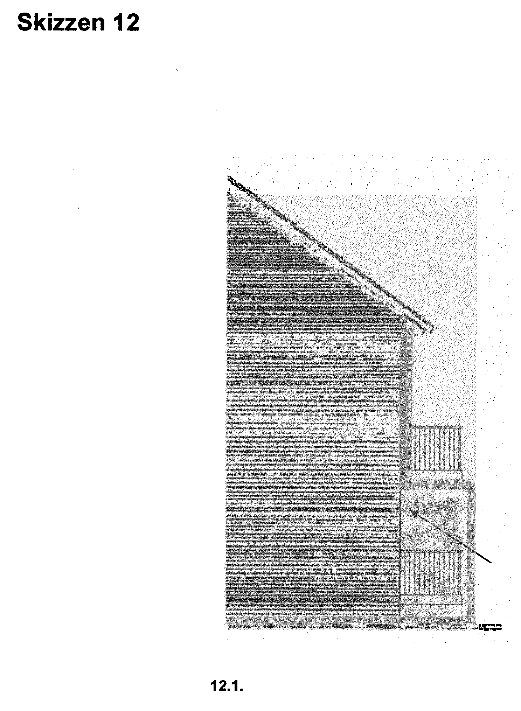

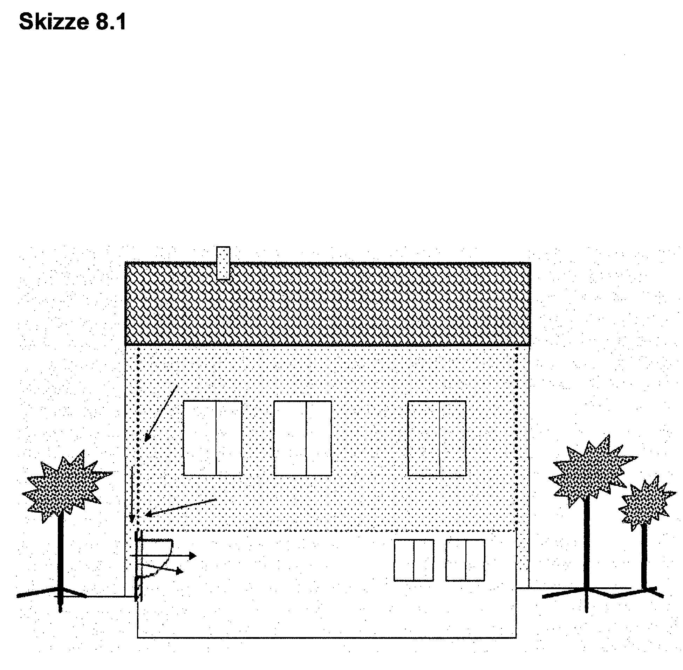

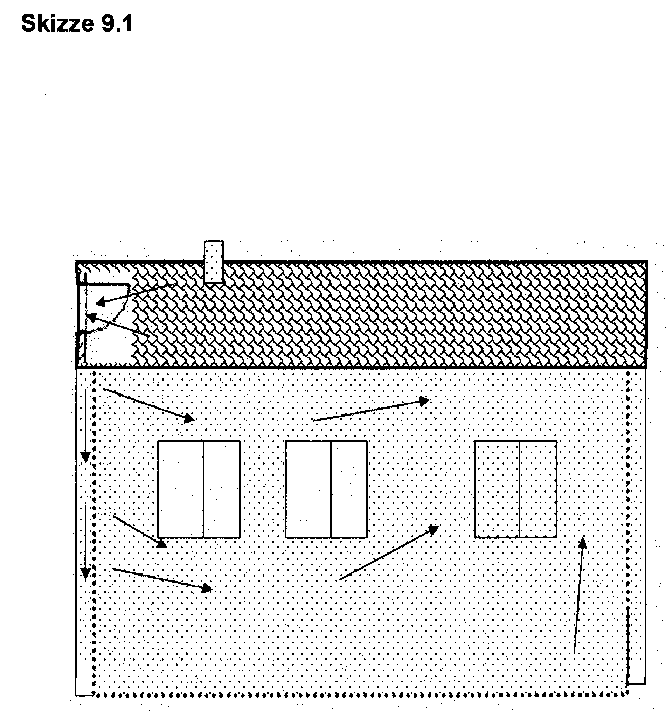

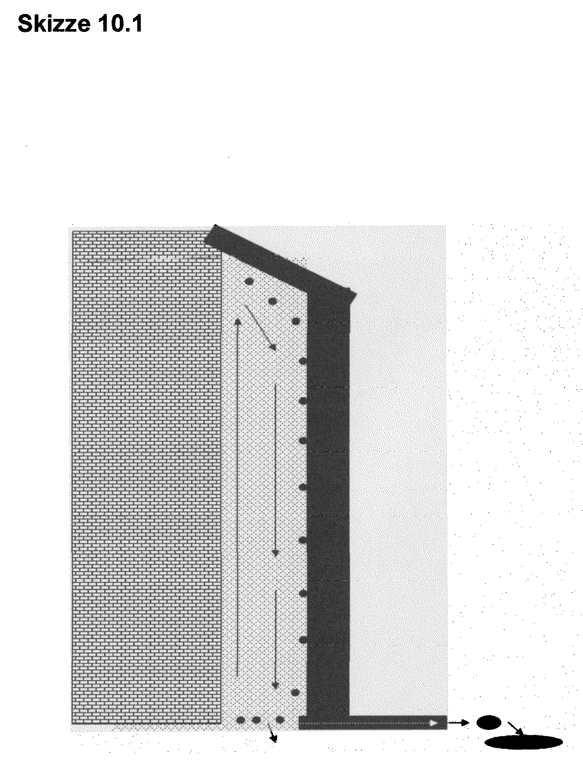

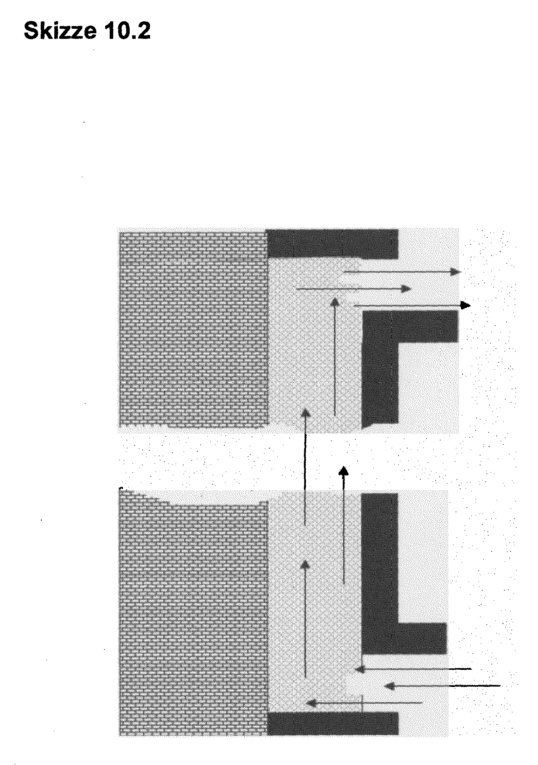

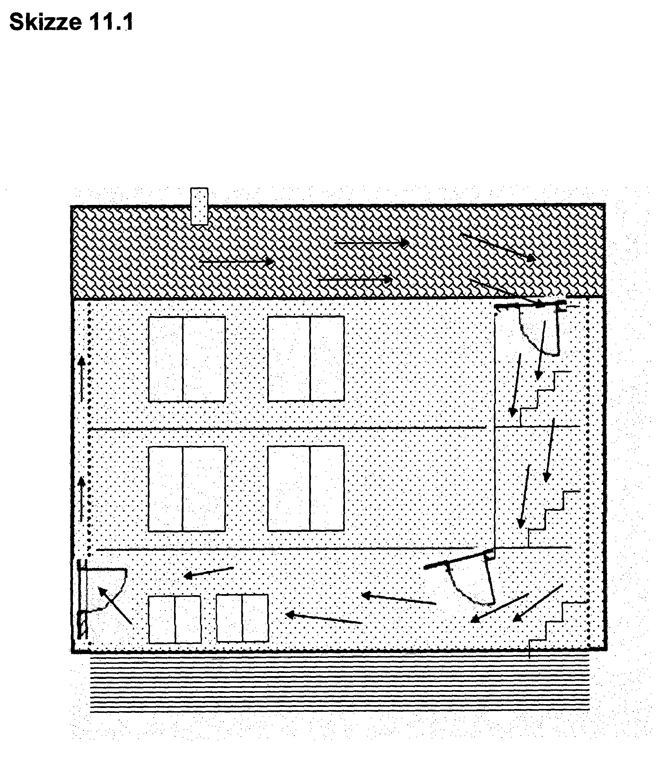

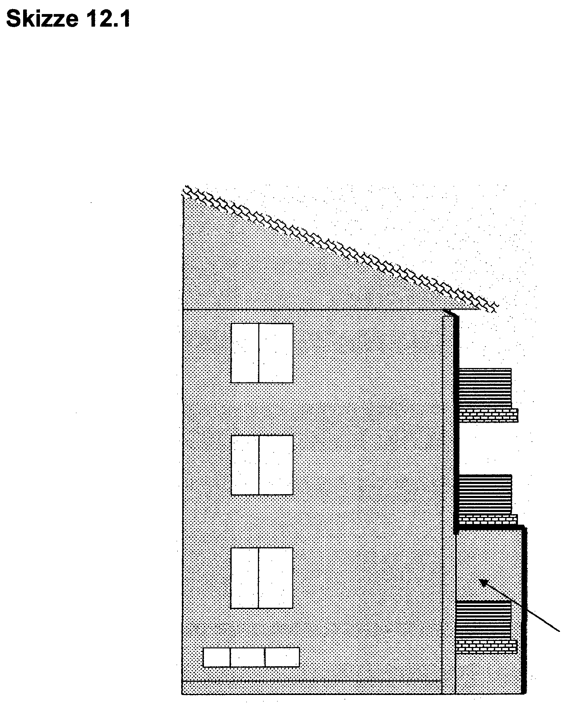

**Weitere Ausgestaltung der Erfindung:** Natürliche oder baulichen Wärmespeicher des Gebäudes werden zusätzlich in das Verfahren aaB eingebunden. **Patentanspruch 6** ist gekennzeichnet durch die zusätzliche **Einbindung des Kellers** in das neue Verfahren. Je nach baulichen Voraussetzungen des konkreten Altbestandes existieren hierfür individuelle Möglichkeiten. Zeichnung 8 zeigt eine mögliche Variante. Die Einbeziehung des Kellers erfolgt durch innere Schleusen ("Kellerschleusen"), zum Beispiel über bereits vorhandene Kellerfenster, die die Luft innerhalb der Luftschicht (2) mit dem Luftvolumen des Kellers verbinden bzw. trennen, aber keine Verbindung zur Außenumgebung ermöglichen. Energetische Effekte werden sowohl bei ungedämmten als auch vollständig gedämmten Kellern erreicht. Jedoch bringt eine "nur" gedämmte Kellerdecke die größten Vorteile, da die um den Keller gespeicherte Erdwärme optimal genutzt werden kann. Im Verfahren aaB dient der Keller als zusätzlicher Wärmespeicher und Wärmegeber. Das Öffnen von inneren Kellerschleusen bringt vor allem im Winter, wenn die Außentemperaturen unter den Gefrierpunkt fallen, energetische Vorteile. Da die Kellerwände Wärme der umgebenen Erde speichern, besitzt der Keller in unserem Breiten auch bei langen Frostperioden noch Temperaturen über dem Gefrierpunkt. Wenn die Außentemperaturen unter die Temperatur des Kellers fallen, kühlt sich die Luftschicht (2) der aaB normalerweise im gleichen Maße ab. Werden jedoch innere Kellerschleusen geöffnet, kann der Abkühlung der Luftschicht (2) entgegen gewirkt werden, in dem ein Temperaturausgleich des Luftvolumens des wärmeren Keller mit der Luft der Luftschicht (2) erzwungen wird. Die resultierende Mischtemperatur der Luftschicht (2) wird erhöht und ist von der gewählten Dicke der Luftschicht (2) und dem vorhandenen Luftvolumen des Kellers abhängig. Wird die Temperatur in der Luftschicht (2) durch die Einbindung des Kellers höher, kühlt sich auch die ursprüngliche Außenhülle(3) des Gebäudes(4) weniger ab. Je höher die sich ergebene Mischtemperatur ist, desto niedriger ist der Heizenergiebedarf. Das Öffnen von Kellerschleusen führt aber auch in den wärmeren Jahreszeiten zu Energieeffekten. Ein Wärmeüberschuss in der Luftschicht (2) kann vorrangig in den Keller und nicht zur Außenumgebung geleitet werden. Die zugeführte Wärme wird in der, den Keller umgebenen Erde gespeichert. Sie führt zu einer schnelleren Erwärmung des Gebäudes im Frühling und zu einer langsameren Abkühlung im Herbst. Im Winter führt erhöhte Erdwärme zusätzlich zur höheren Temperierung der Außenwände durch höhere Mischtemperaturen beim Temperaturausgleich. Die Einbindung des Kellers in das Verfahren aaB kann auch zur Trocknung feuchter Keller genutzt werden, in dem die inneren Kellerschleusen und zusätzlich direkte Kellerschleusen, beispielsweise vorhandene Keller- oder Hoftüren, für einen "Durchzug" geöffnet werden. Ein weiterer Vorteil besteht darin, dass über die Einbindung des Kellers in das neue Verfahren die Grenzen des energetischen Gebäudes(4) auf ein einzelnes, nicht freistehendes Objekt reduziert werden können. Die Einbindung des Kellers ersetzt in diesem Fall die "fehlenden" freistehenden Außenseiten des Objektes. Bei nicht freistehenden Immobilien kann die Luft der Luftschicht (2) von einer (freistehenden) Außenseite zu einer anderen, gegenüberliegenden (freistehenden) Außenseite über den Weg durch den Keller direkt umlaufend verbunden werden. Dadurch entfällt die Notwendigkeit, mehrere nicht freistehende Objekte zu einem Gebäude durch eine allumfassende Wetterhülle (1) zusammenführen. **Patentanspruch 7** ist gekennzeichnet durch die zusätzliche **Einbindung des Daches** in das Verfahren aaB. Je nach baulichen Voraussetzungen des konkreten Wohnbestandes existieren individuelle Möglichkeiten, die Dacheinbindung zu erreichen. Zeichnung 9 zeigt eine mögliche Variante. Im Verfahren aaB dient das Dach als zusätzlicher Wärmegeber. Die Einbeziehung des Daches erfolgt über innere Schleusen ("Dachschleusen"), beispielsweise über bereits vorhandene Dachluken, die die Luft der Luftschicht (2) mit dem Luftvolumen im Dach verbinden bzw. trennen. Ein energetischer Nutzen wird sowohl beim ungedämmtem als auch beim gedämmten Dach erreicht, jedoch bringt eine "nur" gedämmte Dachgeschossdecke die größeren Effekte. Die Sonne scheint täglich auf jedes Dach und gibt stetig einen Teil ihrer Energie an das Luftvolumen im Dach ab. Die Temperatur der Luft im Dach ist daher höher als die Umgebungstemperatur. Durch steuerbare innere Schleusen zwischen der Luft im Dach und in der Luftschicht (2) kann die im Dach erwärmte Luft beim Wärmebrückenprinzip(6) vorrangig zur Temperierung der Außenwände der Gebäudes(4) genutzt werden. Der energetische Nutzen kann annähernd über das Mischungsverhältnis des Luftvolumens des Dachs zu dem Luftvolumen der gesamten Luftschicht (2) bestimmt werden. Den größten Nutzen bringt die Verbindung zur Luftschicht (2) im Frühling und im Herbst. Das Ableiten überschüssige Wärme aus dem Dach bringt auch den Vorteil, dass die Bewohner von Dachgeschosswohnungen weniger unter überhitzten Dächern leiden. Das Verfahren aaB trägt im Atmungsprinzip(7) auch zur Abkühlung überhitzter Dächer über die Steuerung von "Durchzug" bei. Durch intelligente Steuerung wird es möglich, überschüssige Wärme aus dem Dach vorrangig zur Erwärmung kälteren Wohnungen des Erdgeschosses oder zur allgemeinen Erwärmung des Kellers über die Unterstützungsfunktion des Atmungsprinzips(7), gekennzeichnet im Patentanspruch4, zu nutzen. Die Einbindung des Daches kann ebenfalls die Grenzen des energetischen Gebäudes(4) auf nur ein einzelnes, nicht freistehendes Objekt reduzieren, in dem die Luft der Luftschicht (2) mit dem Luftvolumen aus dem Dach direkt verbunden wird und so eine fehlende freistehende Außenwand beim Umlaufen der Luft ersetzt wird. **Patentanspruch 8** ist gekennzeichnet durch die **optimale Regelung des Feuchtigkeitshaushalts** des Gebäudes(4) im neuen Verfahren. Jedes allgemein auftretende Feuchtigkeitsproblem eines Gebäudes(4) wird durch das Atmungsprinzip(7) des Verfahrens aaB reduziert oder eliminiert. Durch gesteuerte Luftströmung kann erhöhte Feuchtigkeit des Gebäudes jederzeit in die Außenumgebung abgeleitet werden. Auch jeder Abtrocknungsprozess kann zusätzlich wesentlich beschleunigt werden. Bereits vorhandene Feuchtigkeitsprobleme, wie bspw. feuchte Keller, werden reduziert oder eliminiert. Die Feuchtigkeit vom Innern des Gebäudes kann wie bisher auch über die direkten Schleusen ohne Umwege direkt in die Außenumgebung abgeführt werden. Auch die Luftschicht(2) selbst wirkt potentiellen Feuchtigkeitsproblemen aktiv entgegen. Feuchtigkeit von außen gelangt nicht direkt an die ursprüngliche Außenhülle (3) und wird vorrangig mit und durch die Luftschicht (2) ausgeglichen. Die Luftschicht wirkt außerdem als Temperaturpuffer zwischen der Außenumgebung und der ursprünglichen Außenhülle (3). Ihre Temperaturunterschiede werden über die Luftschicht (2) angeglichen. Das Wärmebrückenprinzip führt zur gleichmäßigeren Erwärmung der Außenflächen, was einer Verschiebung des Taupunktes ins Mauerwerk aktiv entgegen wirkt. Hohe Differenzen zwischen den Temperaturen verschiedener Gebäudeteile werden durch die gleichmäßigere Erwärmung der Außenflächen ebenfalls nivelliert. Dies führt zu weniger Kondensatbildung, was die Schimmelbildung wesentlich reduziert. Jedoch wirkt die Luftschicht(2) auch als Feuchtigkeitspuffer. Innerhalb der Luftschicht (2) kann Kondensat entstehen, wenn sich die Temperatur der Außenluft soweit abkühlt, dass die Sättigungsgrenze des Wasserdampfes überschritten wird. Die überschüssige Luftfeuchtigkeit kondensiert in der Luftschicht(2), die atmungsaktive Basishülle "schwitzt". Das Schwitzen kann nur im geschlossen System der Erfindung auftreten, denn dadurch besteht keine Möglichkeit, die Temperatur, den Druck und überschüssige Feuchtigkeit der Luft in der Luftschicht(2) mit der Außenumgebung auszugleichen. Um den notwendigen Ausgleich zu ermöglichen, gibt es verschiedene Varianten. Sie können alternativ oder miteinander kombiniert genutzt werden, so wie in Skizze 10.1 dargestellt. Die einfachste Variante ist, durch Öffnen äußere Schleusen den Wechsel zum offenen System zu erzwingen. Aber auch das Öffnen innere Schleusen, bspw. zum Dach, kann genutzt werden. Alle Kombinationen von inneren und äußeren Schleusen in Verbindung mit direkten Schleusen führen zur Abfuhr des Kondensates aus der Luftschicht (2). Der Wechsel zum offenen System ist in den Sommermonaten zu bevorzugen. In kälteren Monaten bedeutet ein Wechsel zum offenen System aber auch immer Wärmeverluste für das Gebäude(4). Eine alternative Variante besteht darin, eine "obere Trocknungsschicht" zu setzen, die kontinuierlich der Kondensatbildung entgegen wirkt. Dazu wird der obere Abschluss der Wetterhülle (1) zur ursprünglichen Außenhülle (3) durch eine Trocknungsschicht ersetzt, wie in Skizze 10.1. gezeigt. Hierfür wird luftdichtes, aber wasserdampfdiffusionsoffenes oder semipermeables Material genutzt. Da das Material osmotisch wirkt, lässt es Wasserdampf von der Luftschicht (2) in die Außenumgebung, aber nicht umgekehrt. Eine weitere Möglichkeit ist, unter dem oberen luftdichten Abschluss der Wetterhülle (1) eine Schicht hygroskopischen Materials in der Luftschicht (2) anzubringen, um den Wasserdampf zu binden und zu puffern. Der konkrete Aufbau und die Wahl des Materials für eine obere Trocknungsschicht sind individuell. Eine weitere Variante besteht in einem gerichteten Kondensatablauf. Dabei läuft das Kondensat einer schwitzenden Luftschicht (2) an der Innenseite der Wetterhülle (1) einfach ab, wenn der obere luftdichte Abschluss der Wetterhülle (1) entsprechend gesetzt wird, wie Skizze 10.1 zeigt. Wenn der untere Bereich des Abschlusses der Wetterhülle (1) zusätzlich mit dem Erdreich verbunden ist, so wie in Skizze 10.1., kann das ablaufende Kondensat in das Erdreich versickern oder aber auch im unteren Bereich der Wetterhülle (1) aufgefangen und zielgerichtet abgeleitet werden. Einer schwitzenden Luftschicht (2) kann auch durch Anbringen von "Trocknungsschleusen" begegnet werden. Trocknungsschleusen sind äußere Schleusen, die nur dazu dienen, Kondensat in der Luftschicht (2) schnellstmöglich, also mit geringstem Wärmeverlust, in die Außenumgebung zu transportieren. Trocknungsschleusen befinden sich aus diesem Grund im oberen Bereich der Wetterhülle(1). Im Gegensatz zu äußeren Schleusen für Wärmeverteilung werden sie nicht an der gegenüberliegenden Außenwand, sondern direkt an der schwitzenden Außenwand geöffnet. So erfolgt der Feuchtigkeitsausgleich der Luft in der Luftschicht (2) direkt und schnell, wie Skizze 10.2 zeigt. Nach Ausgleich der Feuchtigkeit werden Trocknungsschleusen umgehend wieder geschlossen. **Patentanspruch 9** ist gekennzeichnet durch **das vollständige Gesamtsystem** der atmungsaktiven Basishülle eines Gebäudes(4). Ein vollständiges System besteht, wenn alle zusätzlichen Wärmespeicher und Wärmegeber des Gebäudes(4), wie das Dach, der Keller, der Hausflur oder weitere Anbauten mit der Luft in der Luftschicht (2) verbunden oder getrennt werden können, wie in Zeichnung 11 dargestellt. Im vollständigen Gesamtsystem werden die höchsten Energieeinsparungen des Gebäudes erzielt, da alle Vorteile und Kombinationen des Verfahrens aaB genutzt werden können. Durch die Möglichkeit der variablen Steuerung der Luftströmung entsprechend der klimatischen Bedingungen wird Wärme, die im Innern oder außerhalb des Gebäudes erzeugt wird, optimal in alle Richtungen auf das Gebäude(4) verteilt. Nicht nur die an einer Außenwand erzeugte Wärme kann zu den anderen Außenwänden verteilt werden. Nachts im Winter kann die Wärme des Kellers und des Erdreiches die Außenwände temperieren. Tagsüber im Sommer kann die Wärme aus dem Dach vorrangig die Außenhüllen, den Hausflur und den Keller temperieren oder das Dach schneller abgekühlt werden. Der Hausflur des Gebäudes kann im Sommer abgekühlt und im Winter zusätzlich erwärmt werden. **Patentanspruch 10** ist gekennzeichnet durch die **Erweiterung** der aaB um **zusätzliche Treibhäuser.** Der Wärmebedarf durch Heizenergie des Gebäudes(4) wird noch weiter gesenkt, wenn in das Verfahren aaB die Nutzung "zusätzlicher Treibhäuser" eingebunden wird. Zusätzliche Treibhäuser können je nach individuellen Gegebenheiten des Wohnbestandes durch unterschiedliche Varianten realisiert werden: Die südlichorientierte Wetterhülle (1) oder vorhandene Balkone und Terrassen können in Wintergärten umfunktioniert werden, wie Zeichnung 12 zeigt. Alternativ können Vorgärten als Gewächshäuser dienen. Eine teilweise transparente Dacheindeckung bringt ebenfalls zusätzliche Energieeffekte. Entscheidend ist bei allen Varianten, dass die zusätzlichen Treibhäuser über innere Schleusen in das Verfahren aaB eingebunden werden. Durch eine Änderung von Balkonen, Vorgärten, Dächern zu Treibhäusern wird zusätzliche Wärmeenergie erzeugt, die durch die Wirkungsweise der aaB allen Außenwänden und Bauteilen durch entsprechende Steuerung der Schleusen zugeführt werden kann. Ein Wärmeüberschuss der zusätzlichen Treibhäuser kann an jeden Ort des Gebäudes(4) innerhalb der Luftschicht (2) weitergeleitet oder bei Wärmeüberschuss in die Außenumgebung abgeführt werden. Zusätzliche Treibhäuser besitzen auch den Vorteil, dass sie bei kalten Außentemperaturen einen zusätzlichen Wärmegewinn über die Abgabe ihrer gespeicherten Erdwärme an die aaB bringen. **Patentanspruch 11** ist gekennzeichnet durch **Zusatzmaßnahmen,** die den Energiegewinn aus dem neuen Verfahren erhöhen oder zusätzlich nutzen. Die zusätzlichen Treibhäuser und auch die transparente Wetterhülle(1) des Verfahrens aaB können gleichzeitig auch zur Erwärmung des Warmwassers genutzt werden. Eine andere effiziente Maßnahme besteht darin, die verschiedenen Seiten der ursprünglichen Außenhülle(3) mit unterschiedlichen Farbanstrichen für effiziente Flächentemperierung zu optimieren. So kann die Außenhülle(3) der Nordseite dunkel gestrichen werden, um auf dieser Seite mehr überschüssige Wärme speichern zu können. Die Südseite erhält dagegen einen hellen Anstrich. Da das Verfahren aaB umso effektiver wirkt, je größer der Unterschied in den thermischen Eigenschaften von der Wetterhülle (1) zur ursprünglicher Außenhülle(3) ist, bietet sich an, das transparente Material der Wetterhülle(1) noch effektiver zu nutzen, in dem die Wetterhülle(1) doppelwandig, mit einer dazwischen liegenden zusätzlichen, "stehenden" Luftschicht von maximal 4 cm aufgebaut wird. Die Luftschicht innerhalb der Wetterhülle(1) nähert sich dem ruhenden Zustand. Im Idealfall erreicht die in der Wetterhülle befindliche Luft die allerbesten Dämmwerte. Auch andere Maßnahmen zur Verbesserung der transparenten Wetterhülle(1) können genutzt werden. Auf der Nordseite, auf der die Transparenz der Wetterhülle nicht benötigt wird, kann diese Luftschicht auch mit anderem Dämmmaterial gefüllt oder ganz auf die Transparenz zugunsten anderer Dämmmaterialien verzichtet werden. **Patentanspruch 12** ist gekennzeichnet durch den Aufbau von **Teilvarianten** der atmungsaktiven Basishülle. Teilvarianten entstehen, wenn auf eine vollständig umlaufende Luftschicht(2) über alle freistehenden Außenwände der ursprünglichen Außenhülle(3) verzichtet wird und nur teilweise eine Wärmeverteilung an andere Außenflächen erfolgt, beispielsweise nur von der West- auf die Nordseite. Auch über den Weg der Einbindung des Luftvolumens anderer Bauteile, wie dem Dach oder dem Keller, kann eine Teilvariante aufgebaut werden. Der Aufbau von Teilvarianten kann auf Grund unterschiedlicher Gründe notwendig sein, führt aber ebenfalls immer zur Energieeffizienz der vorhandenen Wärmeenergie.
**erreichte Vorteile der Erweiterungen:** Das neue Verfahren kann als vollständiges Gesamtsystem maximiert oder nur in einer Teilvariante aufgebaut werden. Die Erfindung kann den Gegebenheiten des jeweiligen Wohnbestandes und dem finanziellen Rahmen der Eigentümer individuell angepasst werden. Für jeden Wohnbestand entsteht die ökonomischste und nachhaltigste Variante der energetischen Nutzung der Gebäudehülle. Selbst bei denkmalgeschützten Beständen kann das Verfahren in einer Kleinvariante effizient arbeiten. Jede Teilvariante kann nachträglich zur Vollvariante erweitert werden. Es kann sowohl mit kostengünstigen als auch kostenintensiveren Material gearbeitet werden. Es muss kein zusätzlicher technischer Aufwand betrieben werden, jedoch führt jeder zusätzliche Aufwand zu weiteren effizienten Ergebnissen. Neben dem Erreichen von Energieeffizienz verringert oder eliminiert die aaB bereits vorhandene Feuchtigkeit im Altbestand. Sie schadet weder der Gebäudesubstanz noch der Gesundheit der Bewohner. Die atmungsaktive Basishülle entwickelt sich zur effizientesten Maßnahme energetischer Nutzung der Gebäudehüllen des Wohnbestandes.

Es zeigen die Skizzen:
Skizzen 1 Grundkomponenten des Verfahrens
   1.1. Grundaufbau der Atmungsaktiven Basishülle
   1.2. "energetisches Gebäude (4)" mit Wetterhülle und Luftschicht
Skizzen 2 Das geschlossene System des Verfahrens
   2.1. Wetterhülle - oben und unten luftdicht
   2.2. Wetterhülle mit geschlossener Luftschicht
   2.3. Wetterhülle - luftdicht zur Außenumgebung
Skizzen 3 Das Wärmebrückenprinzip
   3.1. umlaufende, nicht voneinander getrennte Luftschicht
   3.2. Wärmeverteilung beim Wärmebrückenprinzip
Skizzen 4 Verteilung lokal erzeugter Wärme
   4.1. Wärme aus Solarenergie
   4.2.Transmissionswärme von Wärmequellen im Innern
Skizzen 5 Nutzung bestehender Wärmebrücken
   5.1. an Wärmebrücken tritt Wärme aus, an Wärmebrücken tritt Wärme ein
Skizzen 6 Das offene System -Atmungsprinzip-
   6.1. energetischer Ausgleich mit der Außenumgebung - "Ausatmen"
   6.2. Schleusen steuern die Richtung der Luftströmung
Skizzen 7 Die Schleusentypen der Atmungsaktiven Basishülle
   7.1. "direkte" Schleusen (bereits vorhanden)
   7.2. "innere" Schleusen, keine Öffnung zur Außenumgebung
   7.3. "äußere" Schleusen, keine Öffnung zum Innern des Gebäudes
Skizzen 8 Einbeziehung des Kellers in die Atmungsaktive Basishülle
   8.1. Einbindung durch innere Kellerschleuse
Skizzen 9 Einbeziehung des Daches in die Atmungsaktive Basishülle
   9.1. Einbindung durch innere Dachschleuse
Skizzen 10 Varianten der Feuchtigkeitsabführung (Kondensatabführung)
   10.1. Kondensatabführung Trocknungsschicht oben, Kondensatablauf und Versickern unten
   10.2. Wirkung einer Trocknungsschleuse
Skizzen 11 Das vollständiges Gesamtsystem des Verfahrens
   11.1. innere Dach- und Kellerschleuse, zusätzlich Einbindung des Hausflurs (innere Schleuse)
Skizzen 12 Nutzung zusätzlicher Treibhäuser
   12.1. Treibhauseffekt durch Einbeziehung von Balkon oder Garten in Wettehülle

## Patentansprüche

1. **Patentanspruch 1** ist **gekennzeichnet durch das neue Verfahren -atmungsaktive Basishülle (aaB)-,** das der energetischen Nutzung von Wärme aus Solarenergie und/oder von Transmissionswärme aus dem Innern des Gebäudes zur Heizenergieeinsparung von Altbeständen dient. Das Verfahren wird **gekennzeichnet durch** die grundlegende Anordnung seiner Grundkomponenten und ihrer energetischen Wirkung.
1.1. Kennzeichnet den neuen Aufbau der Grundkomponenten des Verfahrens:
eine zusätzliche äußere Wetterhülle(1) des Gebäudes und
eine umlaufende Luftschicht (2) und
die ursprüngliche Außenhülle (3) des Wohnbestandes.
1. 2. Kennzeichnet die physikalischen und technischen Anforderungen des Aufbaus der Grundkomponenten des Verfahrens,
1.2.1. Die Komponente -Wetterhülle(1)- ist eine Fassadenkonstruktion, die zusätzlich um den Altbestand aufgebaut wird.
1.2.1.1. Die zusätzliche Wetterhülle (1) muss alle Anforderungen an eine Wetterhülle (1) erfüllen, die nach dem Stand der Technik grundsätzlich für den Wetter-,
Brand- und Schallschutz einer Gebäudefassade gestellt werden. Für die Fassadenkonstruktion stehen bereits eine Vielzahl von Varianten zur Verfügung, aus denen gewählt werden kann.
1.2.1.2. Die Wetterhülle (3) besteht mindestens an einer der sonnenorientierten Gebäudeseiten des Altbestandes (Ost- und/oder Süd- und/oder Westwand) aus transparentem Material.
1.2.1.3. Die Wetterhülle (1) ist luftdicht aufzubauen.
1.2.1.4. Neu sind die energetischen Eigenschaften der Wetterhülle (1). Ihre Mindestanforderung besteht nur darin, gegenüber der ursprünglichen Gebäudehülle des Wohnbestandes - der Komponente Außenhülle (3) des Verfahrens - niedrigere Wärmedurchgang- und höhere Dämmwerte zu besitzen.
1.2.1.5. Neu ist, dass die Wetterhülle(1) die zwischen ihr und der ursprünglichen Außenhülle (3) sich befindende Komponente Luftschicht (2) so umhüllt, dass die Luft innerhalb der Luftschicht vollständig nach allen Seiten des Gebäudes (4) ungehindert umlaufen kann.
1.2.1.6. Neu ist, dass die Wetterhülle (1) an jeder Außenseite zusätzlich luftdicht verschließbare Öffnungen, genannt Schleusen(5), besitzt, die separat gesteuert geöffnet oder geschlossen werden können.
1.2.1.7. Neu ist, dass über die Steuerung aller oder nur einiger Schleusen (5) ein Wechsel der energetischen Funktionsweise des Verfahrens verursacht und/oder geregelt wird.
1.2.2. Ist **gekennzeichnet durch** die Anforderungen an die Komponente -Luftschicht(2)-.
1.2.2.1. Neu ist, dass die Luft innerhalb der Luftschicht (2) sich zwischen der Wetterhülle (1) und der Außenhülle (3) ungehindert von einer Seite zu jeder anderen Seite des Gebäudes(4) und zwar innerhalb der Luftschicht(2) umlaufend bewegen kann.
1.2.2.2. Das ungehinderte Umlaufen der Luft über alle Seiten der Wetterhülle(1) innerhalb der Luftschicht (2) ist ein Grundkriterium des gesamten Verfahrens.
1.2.2.3. Die konkrete Dicke der Luftschicht(2) wird jeweils individuell den spezifischen Faktoren und Vorgaben des Altbestandes angepasst.
Die Dicke der Luftschicht (2) ist abhängig von:
- der Lage und dem Standort des konkreten Altbestandes
- den thermischen Voraussetzungen der Außenhülle(3) und der Wetterhülle (1)
- den konkreten energetischen Anforderungen und Erweiterungen der Umsetzung des Verfahrens, bspw. nur einen Teilaufbau auf Grund wirtschaftlicher Aspekte.
1.2.2.4. Die Dicke der Luftschicht(2) kann zwischen den Außenseiten des Gebäudes verschieden sein. Die Dicke der Luftschicht(2) einer jeden Außenseite ist abhängig:
- von der Lage der Außenwand zum natürlichen "Sonnenumlauf"
- von der Nutzung und/oder Wärmeerzeugung im Innern des Gebäudes
1.2.3. Die Komponente Außenhülle(3) besteht in der ursprünglichen Fassade des Altbestandes.
1.2.3.1. Neu ist, dass an die Komponente Außenhülle (3), also der ursprünglichen Gebäudehülle, keinerlei neue oder zusätzliche Anforderungen gestellt werden.
1.2.3.2. Die ursprünglichen Charaktermerkmale der Außenhülle(3) in Bezug auf ihre thermischen Eigenschaften, hinsichtlich bestehender Kältebrücken, bleiben unverändert bestehen.
1. 3. Neu ist das Zusammenwirken der Grundkomponenten nach Anspruch 1.2 zur Gewährleistung der energetischen Funktionsweisen des Verfahrens.
1.3.1. Neu ist die energetische Funktionsweise -Wärmebrückenprinzip (6)- des Verfahrens.
1. 3.1.1. Das Wärmebrückenprinzip (6) ist **gekennzeichnet durch**:
1.3.1.1.1. Alle Schleusen(5) der Wetterhülle(1) nach Anspruch 1.2.1.6. sind luftdicht verschlossen.
1.3.1.1.2. Die Luft der Luftschicht(2) befindet sich **dadurch** in einem einseitig geschlossenen System, und zwar einem geschlossenen System gegenüber der Außenumgebung
1.3.1.1.3. Die Luft der Luftschicht (2) kann keinen energetischen Ausgleich von Druck und Temperatur mit der Luft der Außenumgebung durchführen.
1. 3.1.2. Die Kriterien entsprechend Anspruch 1.3.1.1. verursachen die Wirkungsweise nach Wärmebrückenprinzip (6) auf natürlichem Weg:
1.3.1.2.1. Lokale Wärme, von außen (Solarenergie) oder Transmissionswärme aus dem Innern des Gebäudes erwärmt die Luft innerhalb der Luftschicht(2).
1.3.1.2.2. Die Luft innerhalb der Luftschicht kann keinen energetischen Austausch mit der Luft außerhalb der Luftschicht erreichen. Sie wird gezwungen, zunächst innerhalb der Luftschicht einen energetischen Ausgleich (ein energetisches Gleichgewicht) zu erreichen.
1.3.1.2.3. Der Ausgleich erfolgt von warm nach kalt. Die Luft gibt ihre Wärme in der Luftschicht (2) an kältere Seiten des Gebäudes ab. Temperaturunterschiede innerhalb der Luftschicht(2) werden nivelliert.
1.3.1.2.4. Der energetische Ausgleich mit den Hüllen (1) und (3) des Verfahrens erfolgt danach, und zwar auf Grund der thermischen Vorgaben nach Anspruch 1.2.1.4 vorrangig mit der ursprünglichen Außenhülle(3).
1. 3.1.3. Die lokal erwärmte Luft innerhalb der Luftschicht(2) dient beim Wärmebrückenprinzip zur allgemeinen gleichmäßigen Flächentemperierung der ursprünglichen Außenhülle(3), bei gleichzeitiger Dämmung des Gebäudes(4).
1. 3.1.4. Die ursprüngliche Außenhülle(3) fungiert energetisch als eine großflächige Wärmebrücke, die dabei auch alle ursprünglichen Wärmebrücken des Gebäudes energetisch nutzt.
1.3.2. Neu ist die zusätzliche energetische Funktionsweise -Atmungsprinzip (7)- des Verfahrens.
1.3.2.1. Das Atmungsprinzip (7) ist **gekennzeichnet durch**:
1.3.2.1.1. Alle oder einige Schleusen(5) der Wetterhülle(1) nach Anspruch 1.2.1. sind geöffnet.
1.3.2.1.2. Die Luft der Luftschicht(2) befindet sich somit im offenen System zur Luft der Außenumgebung.
1.3.2.1.3. Die Luft der Luftschicht(2) kann einen Ausgleich von Druck und Temperatur mit der Luft der Außenumgebung durchführen.
1.3.2.2. Eine geänderte energetische Funktion des Verfahrens wird verursacht.
1.3.2.2.1. Die Strömungsgeschwindigkeit der Luft der Luftschicht(2) wird erhöht, und zwar variabel steuerbar.
1.3.2.2.2. Die Wärmeleitfähigkeit der Luft der Luftschicht(2) wird erhöht, und zwar variabel steuerbar
1.3.2.2.3. Die Dämmeigenschaft der Luft innerhalb der Luftschicht(2) wird vermindert, und zwar variabel steuerbar.
1.3.2.2.4. Die Luft innerhalb der Luftschicht(2) wird energetisch vorrangig direkt mit der Außenumgebung ausgeglichen.
1.3.2.3. Die Funktion dient dazu, die Luft innerhalb der Luftschicht mit der Außenluft auszutauschen und/oder abzukühlen.
1.3.2.4. **Durch** diese Funktionsweise wird der ursprünglichen Außenhülle(3) Luft zur Kühlung und auch zur Trocknung aus der Außenumgebung zugeführt.
1.3.2.5. Die Luftzufuhr zur ursprünglichen Außenhülle(3) von außen wird im Verfahren als "Atmung" der Außenhülle(3) bezeichnet.

2. **Patentanspruch 2** ist **gekennzeichnet durch** die Erweiterung des Patentanspruches 1 auf ein "energetisches Gesamtgebäude". Gekennzeichnet wird eine neue **Definition von Gebäude(4)** im energetischen Sinn der Erfindung nach Patentanspruch1.
2.1. Die Wetterhülle (1) nach Anspruch 1.2.1. definiert die Grenzen eines "energetischen Gesamtgebäudes" neu.
2.1.1. Je nach konkreten Gegebenheiten kann umlaufende eine Wetterhülle(1) um
- eine einzelne freistehenden Immobilie oder
- mehreren, nicht freistehenden Immobilien oder
- um ganze Straßenzüge aufgebaut werden.
2.1.2. Eine Wetterhülle(1) begrenzt somit eine energetisches Gesamtgebäude (4), dass aus mehreren Einzelgebäuden bestehen kann.
2.2. Die energetischen Effekte des Verfahrens nach Anspruch 1 werden für alle Immobilien innerhalb eines energetischen Gebäudes (4) nach Anspruch 2.1., also einer umschließenden Wetterhülle(1) gemeinsam genutzt.

3. **Patentanspruch 3** ist **gekennzeichnet durch** die **Optimierung des Wärmebrückenprinzips** (6) nach Anspruch 1.3.1 **durch** die nach Anspruch 3.1.bis 3.4. gekennzeichneten Maßnahmen.
3.1. Maßnahme 1 ist **dadurch** gekennzeichnet, dass die Außenhülle(3) gemäß Anspruch 1.2.3. auf keiner Seite nachträglich energetisch saniert wird.
3.1.1. Der Wärmestrom von Außen ins Innere des Gebäudes über die Außenhülle(3) wird somit nicht zusätzlich verhindert.
3.1.2. Der Wärmestrom von Innen nach Außen über die Außenhülle(3) wird somit nicht verhindert
3.1.3. "Überschüssige" Wärme **durch** Sonneneinstrahlung von außen und/oder **durch** Transmission aus dem Innern des Gebäudes (4) dient über ihren Transport über die Luft der Luftschicht(2) der Temperierung kälterer Wände der ursprünglichen Außenhülle(3).
3.1.4. "Verlust" von Wärme an einer Wand des Gebäudes bedeutet im Verfahren vorrangig einen Wärmegewinn an kälteren Wänden des Gebäudes(4).
3.2. Maßnahme 2 ist **dadurch** gekennzeichnet, dass vorhandene Wärmebrücken der Außenhülle(3) nach Anspruch 1.2.3. nachträglich nicht energetisch saniert werden.
3.2.1. Alle vorhandenen Wärmebrücken werden **durch** die Luftschicht (2) umhüllt.
3.2.2. Der höhere Wärmedurchgang von innen nach außen wird nicht verhindert.
3.2.3. Wärmebücken sind vorteilhafte Wärmeaus- und -eintrittspunkte in das Gebäude (4).
3.2.3.1. Wärme aus dem Innern des Gebäudes(4) erwärmt an Wärmebrücken schneller die Luft der Luftschicht (2) und wird gleichmäßig auf alle Seiten des Gebäudes(4) zur Flächentemperierung verteilt.(vorteilhafter Wärmeaustrittspunkt)
3.2.3.2. Lokal überschüssige Wärme innerhalb der Luftschicht (2) kann an Wärmebrücken anderer Stellen schneller in das Innere des Gebäudes(4) gelangen. (vorteilhafter Wärmeeintrittspunkt)
3.3. Maßnahme 3 ist **dadurch** gekennzeichnet, dass für die Wetterhülle(1) entsprechend Anspruch 1.2.1. an allen sonnenorientierten Seiten (Ost- und Süd und Westausrichtung) transparentes Material verwendet wird.
3.3.1. Ein maximaler Treibhauseffekt an den Gebäudehüllen führt zu zusätzlichen Wärmegewinnen an jeder sonnenorientierten Seite.
3.3.2. Zusätzliche Solarenergie für den Wärmebedarf des gesamten energetischen Gebäudes(4) genutzt.
3.4. Maßnahme 4 ist **dadurch** gekennzeichnet, dass die Dämmeigenschaften der transparenten Wetterhülle(1) entsprechend Anspruch 3.3. erhöht werden.
3.4.1. Die Wetterhülle(1) wird aus doppelwandigem, transparentem Material aufgebaut.
3.4.2. Die zwischen den Doppelwänden "stehenden" Luftschicht ist maximal 4 cm dick.
3.5. Alle Maßnahmen können einzeln oder gemeinsam vorgenommen werden.
3.6. Die Maßnahmen führen zu dem Vorteil, dass überschüssige Wärme **durch** Sonnenenergie an einer Außenwand, die beim Stand der Technik in die Außenumgebung abgeleitet oder verschattet wird, vorrangig zur Temperierung kälterer Außenwände **durch** das Wärmebrückenprinzip genutzt wird.
3.7. Erst, wenn das energetische Gesamtgebäude(4) insgesamt überschüssige Wärme besitzt, wird diese über das Atmungsprinzip (7) in die Außenumgebung abgeführt.
3.8. Alle Maßnahmen führen zu den weiteren Vorteil, dass Sonnenenergie, die bei einer Dämmung, wie bspw. **durch** WDVS, für eine Temperierung des Gesamtgebäudes nicht genutzt wird, beim neuen Verfahren sogar für die Temperierung der jeweils sonnenabgewandten Seite, also auch der Nordseite genutzt wird.

4. **Patentanspruch 4** ist **gekennzeichnet durch** die **Optimierung des Atmungsprinzips** (7) nach Anspruch 1.3.2.
4.1. Die Schleusen (5) der Wetterhülle(1) entsprechend Anspruch 1.2.1. können manuell oder mechanisch oder elektrisch oder elektronisch oder nach einfachen astronomischen oder klimatischen Vorgaben beim Stand der Technik effektiv und/oder wirtschaftlich und einzeln gesteuert werden.
4.2. Die Richtung der Luftströmung innerhalb der Luftschicht(2) wird **durch** optimales Anbringen der Schleusen (5) an der Wetterhülle bewusst gerichtet.
4.2.1. Die Schleusen (5) werden an allen Seiten der Wetterhülle(1) angebracht.
4.2.2. Die Schleusen (5) werden für eine effiziente Wärmeverteilung jeweils im unteren Bereich der Wetterhülle(1) angebracht.
4.2.3. Die Schleusen werden immer zuerst an der jeweils der Sonnen abgewandten Gebäudeseite geöffnet.
4.3. Die Steuerung der Funktion Atmungsprinzips (7) erfolgt über die Schleusen (5) variabel.
4.3.1. Ein Wechsel zwischen dem Wärmebrückenprinzip(6) und der Atmungsfunktion(7) wird **durch** variabel einstellbare Stufen der möglichen Öffnung der Schleusen (5) oder stufenlos erreicht. Je weiter die Schleusen (5) geöffnet werden,
4.3.1.1. umso höher ist die Strömungsgeschwindigkeit der Luft innerhalb der Luftschicht (2).
4.3.1.2. umso mehr kühlt sich das energetische Gebäude (4) ab.
4.3.2. Die Kühlungsfunktion kann den klimatischen Erfordernissen jeweils angepasst werden.
4.3.3. Je weiter und länger die Schleusen (5) geöffnet werden, umso effektiver geht das Atmungsprinzip (7) in die Trocknungsfunktion über. Die Trocknungsfunktion kann den individuellen Erfordernissen des konkreten Wohnbestandes angepasst werden.
4.4. Das Atmungsprinzip(7) dient dem Wärmebrückenprinzip (6) als Unterstützungsfunktion.
4.4.1. **Durch** Öffnen von entsprechenden Schleusen(5) kann wärmere Luft der Luftschicht(2) einer Seite schneller an eine kältere (gegenüberliegende) Außenseite des Gebäudes(4) transportiert.
4.4.2. Hat die wärmere Luft die kältere Seite erreicht, werden die Schleusen(5) geschlossen, bevor die Luft der Luftschicht(2) auf dieser Seite einen energetischen Ausgleich mit der Luft der Außenumgebung durchführen kann.
4.4.3. Die gleichmäßige Temperierung der Außenwände **durch** das teilweise Ausüben des Atmungsprinzips beschleunigt.

5. **Patentanspruch 5** kennzeichnet und definiert die relevanten **Schleusentypen** des Verfahrens gemäß Patentanspruch 1.
5.1. Ist gekennzeichnet von der Definition Schleusentypen des Verfahrens nach Anspruch 1.
5.1.1. Schleusen sind verschließbare Öffnungen, die für die variable Steuerung der Luftzufuhr, den Luftaustausch und den Systemwechsel des Verfahrens nach Patentanspruch 1 zuständig sind.
5.1.2. Die bereits vorhandenen Schleusen des Gebäudes(4), bspw. Fenster und Türen, werden baulich nicht verändert.
5.1.3. Im Wohnbestand bereits vorhandene Schleusen, wie Fenster, Türen und andere verschließbare Öffnungen, können in Abhängigkeit von ihrem neuen Zweck umfunktioniert werden.
5.2. Schleusentypen sind **gekennzeichnet durch** die Unterscheidung von direkten Schleusen und inneren Schleusen und äußere Schleusen.
5.2.1. **Direkte** Schleusen sind Schleusen, die Luft aus dem Innern des Gebäudes direkt zur Außenumgebung führen und umgekehrt. Sie ermöglichen einen Luft- und Feuchtigkeits-austausch der Luft aus dem Inneren des Gebäudes direkt mit der Außenwelt. Sie besitzen keine direkte Verbindung und Möglichkeit des Lustaustausches zur Luftschicht(2).
5.2.1 1. Direkte Schleusen sind bereits in jedem Wohnbestand in Form von herkömmlichen Türen und Fenstern vorhanden.
5.2.1.2. Die Wetterhülle (1) muss luftdicht zu direkten Schleusen abschließen. Das Umlaufen der Luftschicht (2) entsprechend Anspruch 1.2.2 muss um direkte Schleusen immer gewährleistet bleiben.
5.2.1.3. Direkte Schleusen verursachen keinen Systemwechsel des Verfahrens.
5.2.2. Über innere Schleusen kann die Luft der Luftschicht (2) nach Anspruch 1.2.2. nur direkt in das Innere des Gebäudes gelangen und umgekehrt. Sie besitzen keine Verbindung für den Luftaustausch mit der Außenumgebung.
5.2.2.1. Für innere Schleusen werden bereits vorhandene Öffnungen der ursprünglichen Außenhülle(3), wie Kellerfenster oder Zweitfenster eines Raumes umfunktioniert.
5.2.2.2. Auf der Wetterhüllenseite sind innere Schleusen vollständig luftdicht verschlossen.
5.2.2.3. Innere Schleusen werden zum Ausgleich von Temperatur und Druck der Luft der Luftschicht (2) direkt mit der Luft im Innern des Gebäudes genutzt.
5.2.2.4. Die Hauptfunktion besteht in der weiteren Ausgestaltung der Erfindung entsprechend Patentanspruch 6 und 7.
5.2.3. **Äußere** Schleusen ermöglichen einen Luftaustausch der Luft aus der Luftschicht (2) nach Anspruch 1.2.2. mit der Luft der Außenumgebung und umgekehrt. Sie ermöglichen keinen Austausch der Luft der der Luftschicht(2) mit der Luft im Innern des Gebäudes(4).
5.2.3.1. Die äußeren Schleusen sind die Öffnungen in der Wetterhülle(1) entsprechend Anspruch 1.2.1.
5.2.3.2. Äußere Schleusen erzwingen den offensichtlichen Funktionswechsel des Verfahrens nach Anspruch1.
5.2.3.3. Ein direkter Temperatur- und Druckausgleich der Luft der Luftschicht (2) mit der Außenwelt kann nur über äußere Schleusen erfolgen.
5.2.3.4. Die äußeren Schleusen dienen hauptsächlich dem Atmungsprinzip nach Anspruch 1.3.2.
5.2.3.5. Eine Sondervariante äußerer Schleusen stellt die Trocknungsschleuse dar, gekennzeichnet im Patentanspruch 8.5.

6. **Patentanspruch 6** ist **gekennzeichnet durch** die zusätzliche **Einbindung des Kellers** in das neue Verfahren nach Patentanspruch 1.
6.1. Je nach baulichen Voraussetzungen des konkreten Wohnbestandes existieren zur Einbindung des Kellers in das Verfahren individuelle Möglichkeiten.
6.2. Die Einbeziehung des Kellers in das energetische Verfahren erfolgt ausschließlich **durch** innere Schleusen ("Kellerschleusen"). Beispielsweise werden vorhandene Kellerfenster zu inneren Schleusen umfunktioniert. **Durch** Öffnen der Kellerschleusen wird die Luft innerhalb der Luftschicht (2) mit dem Luftvolumen des Kellers verbunden. **Durch** Schließen der Kellerschleusen wird die Luft der Luftschicht vom Keller getrennt.
6.3. Der Keller dient dem Verfahren als zusätzlicher Wärmespeicher und Wärmegeber.
6.4. Das Atmungsprinzip (7) kann **durch** Einbindung des Kellers in das Verfahren auch die Trocknung des Kellers unterstützen.
6.5. **Durch** Einbindung des Kellers wird es möglich, die Grenzen des energetischen Gebäudes(4) auf eine, nicht freistehende Immobilie zu reduzieren.

7. **Patentanspruch 7** ist **gekennzeichnet durch Einbeziehung des Daches** in die atmungsaktive Basishülle nach Patentanspruch 1.
7.1. Je nach baulichen Voraussetzungen des konkreten Wohnbestandes existieren zur Einbindung des Daches in das Verfahren individuelle Möglichkeiten.
7.2. Die Einbeziehung des Daches in das energetische Verfahren erfolgt ausschließlich **durch** innere Schleusen ("Dachschleusen"). Beispielsweise werden vorhandene Dachluken zu inneren Schleusen umfunktioniert. **Durch** Öffnen der Dachschleusen wird die Luft innerhalb der Luftschicht (2) mit dem Luftvolumen des Dachs verbunden. **Durch** Schließen der Dachschleusen wird die Luft der Luftschicht vom Dach getrennt.
7.3. Das Dach dient dem Verfahren als zusätzlicher Wärmegeber.
7.4. Das Atmungsprinzip (7) kann **durch** Einbindung des Dachs in das Verfahren auch die Abkühlung überhitzter Dächer unterstützen.
7.5. **Durch** Einbindung des Dachs wird es möglich, die Grenzen des energetischen Gebäudes(4) auf eine, nicht freistehende Immobilie zureduzieren.

8. **Patentanspruch 8** ist **gekennzeichnet durch** die **optimale Regelung des Feuchtigkeitshaushalts** des energetischen Gebäudes(4) **durch** das neue Verfahren nach Patentanspruch 1.
8.1. Jedes bekannte Feuchtigkeitsproblem eines Gebäudes(4) wird **durch** das Atmungsprinzip reduziert oder eliminiert.
8.2. Die Luftschicht(2) fungiert als Temperaturpuffer zwischen der Außenumgebung und der ursprünglichen Außenhülle (3) und nivelliert Temperaturunterschiede.
8.3. Die gleichmäßigere Erwärmung der Außenflächen des Gebäudes(4) wirkt einer Verschiebung des Taupunktes ins Mauerwerk aktiv entgegen. Die Nivellierung von Temperaturunterschieden verschiedener Gebäudeteile führt zu weniger Kondensatbildung und zu weniger daraus folgender Schimmelbildung
8.4. Eine schwitzende Luftschicht (2) wird **durch** verschiedene Varianten und ihren möglichen Kombinationen reguliert oder eliminiert. Varianten sind:
8.4.1. das Öffnen direkter Schleusen, auch in Kombination mit inneren Schleusen und/oder
8.4.2. das Setzen einer oberen Trocknungsschicht an der Außenhülle mit osmotisch oder hygroskopisch wirkendem Material und/oder.
8.4.3. die Steuerung über einen gerichteten Kondensatablauf und/oder
8.4.4. das Anbringen von "Trocknungsschleusen"
8.5. Neu ist der Typ "Trocknungsschleuse" im Verfahren nach Patentanspruch 1
8.5.1. Trocknungsschleusen sind eine Sonderform äußerer Schleusen, die grundsätzlich nur im oberen Bereich aller Seiten der Wetterhülle (1) angebracht. werden.
8.5.2. Trocknungsschleusen verursachen beim Öffnen immer Wärmeverluste und wirken den Funktionsweisen des Verfahrens entgegen, denn
8.5.2.1 sie werden direkt an der schwitzenden Außenseite geöffnet und
8.5.2.2. verursachen den direkten und schnellsten energetischen Ausgleich der Luft der Luftschicht(2) mit der Außenumgebung
8.5.3. sollten nach dem Feuchtigkeitsausgleich umgehend geschlossen werden.

9. **Patentanspruch 9** ist **gekennzeichnet durch das vollständige Gesamtsystem** der atmungsaktiven Basishülle.
9.1. Alle zusätzlichen Wärmespeicher und Wärmegeber des Gebäudes(4), wie Dach, Keller, Hausflur oder weitere Anbauten können mit der Luft in der Luftschicht (2) verbunden oder getrennt werden.
9.2. Die Anbindung erfolgt je nach konkreten Wohnbestand, jedoch immer über die Nutzung von inneren Schleusen
9.3. **Durch** das vollständige Gesamtsystem werden die höchsten Energieeinsparungen des Gebäudes erzielt. Alle Vorteile des neuen Verfahrens nach Anspruch 1 werden über die verschiedenen Kombinationsmöglichkeiten vollständig genutzt.

10. **Patentanspruch 10** ist **gekennzeichnet durch** die **Erweiterung** des neuen Verfahrens,
nach Patentanspruch 1 um **zusätzliche Treibhäuser.**
10.1. Zusätzliche Treibhäuser können **durch** unterschiedliche Varianten realisiert werden.
10.2. Teile der Wetterhülle (1) oder vorhandene Balkone und Terrassen werden dafür in Wintergärten umfunktioniert. Vorgärten können zu Gewächshäusern umgestaltet werden. Das Dach kann teilweise transparent eingedeckt werden.
10,3. Weitere, speziellere Varianten sind möglich.
10.4. Alle Varianten zusätzlicher Treibhäuser werden grundsätzlich über innere Schleusen in das Verfahren eingebunden.
10.5. Darüber hinaus besitzen diese Treibhäuser zusätzlich immer auch direkte Schleusen.
10.6. Der Wärmeüberschuss zusätzlicher Treibhäuser kann über die Funktionsweise Atmungsprinzip (7) nach Anspruch 1.3.2. an jeden Ort des Gebäudes(4) oder in die Außenumgebung abgeführt werden.
10.7. Zusätzliche Treibhäuser dienen bei kalten Außentemperaturen der Erhöhung der Mischtemperatur in der Luftschicht(2), da ihre gespeicherten Erdwärme über in die Luft der Luftschicht(2) transportiert werden kann.

11. **Patentanspruch 11** ist **gekennzeichnet durch Zusatzmaßnahmen,** die den Energiegewinn des neuen Verfahrens nach Patentanspruch 1 erhöhen oder zusätzlich nutzen.
11.1. Die transparente Wetterhülle(1) und die integrierten zusätzlichen Treibhäuser können gleichzeitig auch zur Erwärmung des Brauchwassers genutzt werden.
11.2. Unterschiedliche Farbanstriche der Außenwände der ursprünglichen Außenhülle(3) optimieren die Flächentemperierung und Speicherung von Wärme in den Außenwänden (bspw. auf der Nordseite schwarzer, auf der Südseite weißer Farbanstrich).
11.3. In Abhängigkeit von Patentanspruch 3 bis Patentanspruch 12 kann die Dicke der Luftschicht(2) den individuellen thermischen Eigenschaften und den genutzten Ausprägungen des Verfahrens angepasst werden.

12. **Patentanspruch 12** ist **gekennzeichnet durch** den Aufbau von **Teilvarianten** der atmungsaktiven Basishülle nach Patentanspruch 1.
12.1. Teilvarianten entstehen, wenn auf eine vollständig umlaufende Luftschicht(2) über alle freistehenden Außenwände der ursprünglichen Außenhülle(3) des Gebäudes (4) verzichtet werden soll oder muss.
12.2. Die luftdichte Wetterhülle(1) wird bei einer Teilvariante mindestens oder nur auf zwei direkt aneinander grenzende Außenwände reduziert.
Die Wetterhülle(1) wird in ihrer Teilvariante beispielsweise nur um die West-und Nordseite aufgebaut und begrenzt somit das energetische Gebäude(4) nur auf einen Teil des möglichen energetischen Gebäudes(4).
12.3. Eine weitere Möglichkeit zum Aufbau einer Teilvariante besteht darin, zwei sich gegenüberliegende Gebäudeseiten, bspw. die Nord- und die Südseite, direkt energetisch zu verbinden, in dem das Luftvolumen des Dachs und/oder des Kellers über innere Schleusen die Luft der Luftschicht(2) der einen Seite mit der Luft der Luftschicht(2) der direkt gegenüberliegenden Seite verbindet. Auch in dieser Variante begrenzt die Teilvariante das energetische Gebäude(4) auf nur einen Teil des möglichen energetischen Gesamtsystems.
12.4. Jede Teilvariante kann nachträglich zur Vollvariante erweitert werden.
